# FASCICULE DE BREVET EUROPEEN

(11) **EP 4 514 606 B1**
(45) Date de publication et mention de la délivrance du brevet: **25.03.2026**
(21) Numéro de dépôt: 23723534.6
(22) Date de dépôt: 28.04.2023
(51) Int. Cl.: B32B 7/12, B32B 17/10

(54) **VITRAGE LUMINEUX DE VEHICULE ET SA FABRICATION**
LEUCHTENDE VERGLASUNG FÜR EIN FAHRZEUG UND HERSTELLUNG DAVON
LUMINOUS GLAZING FOR A VEHICLE, AND PRODUCTION THEREOF

(30) Priorité: 29.04.2022 FR 2204081
(43) Date de publication de la demande: 05.03.2025
(73) Titulaire: Saint-Gobain Sekurit France, 60150 Thourotte (FR)
(72) Inventeur: MAILLAUD, Laurent, 93300 AUBERVILLIERS (FR); DAVIS, Claire, 92400 COURBEVOIE (FR)
(74) Mandataire: Saint-Gobain Recherche
(86) Numéro de dépôt international: PCT/EP2023/061352
(87) Numéro de publication internationale: WO 2023/209206

(56) Documents cités:
- WO-A1-2007/077099
- WO-A1-2015/118279

## Description

La présente invention est relative à un vitrage lumineux, pour véhicule, notamment un vitrage de véhicule routier à diodes électroluminescentes.

Les diodes électroluminescentes ou DEL (LED en anglais) assurent depuis quelques années l'éclairage de dispositifs de signalisation (feux de signalisation,..), de clignotants ou feux de position de véhicules automobiles. L'intérêt des diodes est leur longue durée de vie, leur efficacité lumineuse, leur robustesse, leur faible consommation énergétique et leur compacité, rendant les appareillages les employant davantage pérennes, et nécessitant un entretien réduit. Plus récemment, les diodes électroluminescentes ont été utilisées pour les toits automobiles, notamment des toits feuilletés panoramiques à éclairage par diodes électroluminescentes comme décrit dans le document. La lumière émise par les diodes est introduite par la tranche dans le vitrage intérieur formant guide, la lumière étant extraite du vitrage par une couche diffusante sur le vitrage.

Pour améliorer l'extraction lumineuse, le document WO2008059170 propose un toit de voiture intégrant une couche isolateur optique sous forme d'une couche sol gel de silice poreuse de 400nm entre la couche intercalaire de feuilletage thermoplastique teintée et le verre interne guide de lumière.

WO 2015/118279 A1 divulgue un vitrage lumineux de véhicule comprenant un vitrage feuilleté comportant une première feuille en verre minéral; une deuxième feuille en verre minéral, ayant un indice de réfraction n1 inférieur à 1,6 à 550 nm; un premier intercalaire de feuilletage polymère en contact adhésif entre les deux feuille de verre; une couche isolateur optique isolant optiquement la deuxième feuille de la première feuille, avec un indice de réfraction n2 à 550 nm tel que n1-n2 soit d'au moins 0,08, la couche isolateur optique ayant une épaisseur au moins 600 nm; une source de lumière en couplage optique avec la deuxième feuille formant guide de lumière; de préférence des moyens d'extraction de lumière guidée dans la deuxième feuille; ledit vitrage étant caractérisé en ce que la couche isolateur optique comprend un film à base de fluoropolymère.

La présente invention a donc cherché à mettre au point un vitrage lumineux de véhicule alternatif.

A cet effet, la présente invention a pour objet un vitrage lumineux de véhicule notamment routier (voiture, camion, transport en commun: bus, car etc) ou ferroviaire (en trains, les métros, tramway), de préférence bombé, en particulier un pare-brise, ou encore une lunette arrière, voire un vitrage latéral, de préférence un toit, comprenant un vitrage feuilleté (bombé) - transparent au moins dans un clair de vitre- comportant :
- une première feuille (courbée, bombée, transparente), en verre de préférence minéral ou organique, éventuellement teintée notamment (verre) gris ou vert ou clair, avec une première face principale et une deuxième face principale nue ou revêtue avec un revêtement fonctionnel (transparent) notamment d'au plus 200nm, première feuille, de préférence en verre minéral notamment si destinée à être la feuille extérieure (notamment première face orientée vers l'extérieur du véhicule et même étant la face extérieure, souvent dite face F1 et la deuxième face étant la face F2, nue ou revêtue avec ledit revêtement fonctionnel transparent, notamment électroconducteur (contrôle solaire etc) si verre clair) ou encore première feuille destinée à être la feuille intérieure éventuellement trempé, pour un vitrage routier d'épaisseur de préférence d'au plus 2,5mm, même d'au plus 2,2mm - notamment 1,9mm, 1,8mm, 1,6mm et 1,4mm- et même d'épaisseur d'au moins 0,7mm, par exemple d'indice de réfraction nv d'au moins 1,5 dans le visible
- une deuxième feuille (courbée, bombée, transparente), en verre minéral ou organique, de préférence extraclair, d'indice de réfraction n0 d'au moins 1,5 dans le visible, avec une troisième face principale et une quatrième face principale de préférence nue voire revêtue avec un revêtement fonctionnel (transparent) de préférence d'au plus 400nm ou 200nm, deuxième feuille de préférence en verre minéral, notamment verre minéral éventuellement trempé si destinée à être la feuille extérieure, ou deuxième feuille destinée à être la feuille intérieure troisième face orientée vers l'extérieur souvent dite face F3 du véhicule et quatrième face vers l'habitacle dite face F4 avec ledit revêtement fonctionnel notamment électroconducteur (basse émissivité, , feuille notamment d'épaisseur d'au moins 0,7mm (pour favoriser le guidage de lumière), éventuellement inférieure à celle de la première feuille de verre si deuxième feuille destinée à être la feuille intérieure , même d'au plus 2,2mm - notamment 1,9mm, 1,8mm, 1,6mm et 1,4mm- ou même d'au plus 1,3mm ou d'au plus 1mm, l'épaisseur totale des première et deuxième feuilles de verre étant de préférence strictement inférieure à 5 ou 4mm, même à 3,7mm, première et deuxième feuilles de taille notamment sensiblement identiques, par exemple de forme générale rectangulaire, la première feuille (si extérieure) peut avoir une taille plus importante que la deuxième feuille (si intérieure), dépassant ainsi cette deuxième feuille sur au moins une partie de son pourtour, éventuellement deuxième feuille (côté habitacle) plus petite avec une tranche en retrait notamment d'au plus 10 ou 5cm de la tranche de la première feuille de verre, sur un bord ou plusieurs bords (longitudinaux et/ou latéraux) notamment ou sur tout le pourtour, en particulier utile lorsque la deuxième feuille est couplée optiquement par sa tranche périphérique à une source de lumière.
- un intercalaire de feuilletage polymère (transparent) en contact adhésif avec la troisième face nue ou revêtue et avec la deuxième face nue ou revêtue,

de préférence au moins l'une des première et deuxième feuilles de verre destinée à être le vitrage extérieur est en verre minéral
l'épaisseur de couche(s) entre deuxième face et troisième face étant de préférence d'au plus 1,1mm ou 0,9mm et en particulier l'épaisseur E0 d'intercalaire de feuilletage (d'une ou plusieurs couches adhésives thermoplastique et/ou polymère réticulé) étant d'au plus 1,1mm ou 0,9mm, au moins dans la zone de guidage
l'épaisseur entre première face et quatrième face étant de préférence d'au plus 9mm ou 7mm, notamment pour un véhicule routier,
   - (de préférence sur la troisième face, en particulier face F3, nue ou revêtue) entre la deuxième face et la troisième face, une couche isolateur optique (transparente), isolant optiquement la deuxième feuille de la première feuille (notamment teintée) - et/ou d'une partie éventuellement teintée d'intercalaire de feuilletage -, ayant un indice de réfraction n1 dans le visible avec n0-n1 d'au moins 0,04 dans le visible et même d'au moins 0,1, couche isolateur optique d'épaisseur au moins 500nm et mieux d'au moins 800nm et même 1µm ou 30µm ou 300µm.

Le vitrage comporte en outre de préférence une source de lumière (périphérique, de préférence décalée du clair de vitre) en couplage optique avec la deuxième feuille formant (tout ou partie) guide de lumière, La source de lumière peut être démontable, ajoutée, vendue séparément ou en kit. Le vitrage comporte en outre de préférence des moyens d'extraction de lumière guidée dans le guide de lumière. Les moyens d'extraction peuvent être provisoires (stickers détachables) et donc ajoutés ou remplacés, en particulier côté quatrième face (notamment F4), ou permanents, en particulier côté troisième face (notamment F3).

Naturellement, la deuxième feuille est un guide de lumière opérationnel une fois leur montage de la source de lumière et des moyens d'extraction.

La couche isolateur optique selon l'invention est une couche adhésive en matière polymère réticulé, formant tout ou partie de l'intercalaire de feuilletage.

L'invention réside dans le choix pour la couche isolateur optique d'une couche adhésive transparente ayant ainsi une adhésion avec les feuilles de verre et/ou avec d'autres couches intercalaire si nécessaire, selon ses performances mécaniques et sa capacité d'adhésion aux feuilles. La couche isolateur optique est de préférence monocouche par simplicité voire multicouche polymère réticulé (toutes bas indice). On peut envisager un revêtement bas indice de réfraction (avc np entre n0 et n1 ou égal à n1) entre la couche isolateur optique et la troisième face comme une couche primaire d'adhésion, une couche de silice (nanoporeuse) poreuse. De préférence la couche isolateur optique est sur la troisième face nue voire sur un revêtement transparent (par exemple d'indice de réfraction supérieur à n0) si nécessaire.

La couche isolateur optique s'étend de préférence au moins sur une zone dite de guidage dans le guide qui est entre une zone d'injection de lumière dans le guide et une zone d'extraction de lumière du guide et même couvrant la zone d'extraction de lumière en étant plus proche de la deuxième face que les moyens d'extraction de lumière (qui sont au sein de la deuxième feuille ou en contact avec la troisième face (F3 notamment) ou la quatrième face (F4 notamment), sur troisième face ou la quatrième face sur une face d'un film thermoplastique, adhésif comme un polyvinyl butyral PVB ou non adhésif comme un polyester, le polytéréphtalate d'éthylène PET, orienté vers la troisième face).

La tranche ou bord extérieur de la couche isolateur optique et même de l'intercalaire de feuilletage, peut être décalée du clair de vitre, notamment couche isolateur optique s'étendant sous une couche de masquage périphérique interne entre la deuxième face et la couche isolateur optique.

On peut combiner la couche isolateur optique à une ou plusieurs autres couches adhésives thermoplastique et/ou polymère réticulé, tout en conservant un intercalaire le plus compact, performant mécaniquement, et le plus transparent possible.

La couche isolateur optique est une colle optique (OCA pour optically clear adhesive en anglais, LOCA si liquide) choisie bas indice. Ce peut être une monocouche qui est un film autoportant ou un revêtement sur la deuxième face ou troisième face (nue ou revêtue) ou sur un support (par exemple thermoplastique, de plus haut indice de réfraction, notamment non adhésif, en particulier poylester, PET). Ce peut être un multicouches (multidépots ou un film et un dépôt) comme détaillé plus tard. Si suffisamment épaisse une fraction dite supérieure de l'épaisseur de la couche isolateur optique (la plus éloignée de la troisième face) sert principalement pour l'adhésion, la cohésion du vitrage.

Dans la présente invention, l'expression polymère réticulé concerne la famille des polymères thermodurcissable au sens large.

Dans la présente invention, l'expression verre trempé signifie verre trempé thermiquement en l'absence de toute précision, et de préférence verre trempé pendant une opération de bombage du verre.

De préférence l'indice de réfraction de toute couche selon l'invention est défini pour une valeur de référence dans une gamme allant de 550 et 600nm.

De préférence l'invention concerne un toit de véhicule routier, la deuxième face est la face F2 et la troisième face est la face F3.

On prévoit l'un des arrangements suivants qui peuvent être cumulatifs.

Dans une première configuration, par simplicité et/ou pour un guidage limité à la deuxième feuille, la couche isolateur optique est (de préférence) en contact adhésif avec la troisième face (nue ou revêtue par exemple par une couche transparente bas indice et/ou primaire d'adhésion). Alternativement, notamment pour un renfort mécanique et/ou d'adhésion, la couche isolateur optique est de préférence en contact adhésif une couche adhésive sous-jacente dite inférieure (transparente), en matière thermoplastique ou polymère réticulé. En particulier, la couche adhésive inférieure (mono ou multicouches de préférence un film ou feuillet) guide une partie des rayons et pour ne pas absorber ces rayons en partie, elle est de préférence incolore en particulier extraclair), est d'indice de réfraction n2 supérieur à n1 dans le visible (de préférence n2-n1 d'au moins 0,04 ou d'au moins 0,1). En particulier, la couche adhésive inférieure est en contact adhésif avec la troisième face (nue ou revêtue) et de préférence d'épaisseur d'au plus 0,4mm (pour gagner en compacité), en particulier couche à base de PVB (de préférence avec des plastifiants) ou d'EVA si deuxième feuille en verre minéral ou à base de thermoplastique polyuréthane TPU si en verre organique comme le polycarbonate PC.

En outre, cumulativement ou alternativement à la première configuration ou à son alternative, la couche isolateur optique est de préférence en contact adhésif avec la deuxième face (nue ou revêtue) ou avec une couche adhésive (transparente) sus jacente dite supérieure, en matière thermoplastique ou polymère réticulé, (teintée ou incolore). La couche adhésive supérieure (mono ou multicouches de préférence au moins un film ou feuillet) est en contact adhésif avec la deuxième face et de préférence d'épaisseur d'au plus 0,4mm (pour gagner en compacité), en particulier couche à base de PVB (de préférence avec des plastifiants) ou de copolymère d'éthylène et d'acétate de vinyle EVA.

Selon une réalisation, l'intercalaire comprend principalement voire est constitué d'une couche adhésive supérieure (de préférence film(s)), de la couche isolateur optique (de préférence film ou couche sur support) et d'une couche adhésive inférieure (de préférence film(s)), en particulier couche isolateur optique (de préférence film ou couche sur support polymère notamment polyester, PET) au contact avec une couche adhésive thermoplastique supérieure (de préférence film(s)) et une couche adhésive thermoplastique inférieure (de préférence film(s)) ou encore au contact avec une couche adhésive thermoplastique supérieure et une couche adhésive polymère réticulé inférieure ou encore au contact avec une couche adhésive polymère réticulé supérieure et une couche adhésive thermoplastique inférieure.

L'intercalaire peut comprendre principalement de ces trois couches adhésives en association avec une couche adhésive périphérique sur le pourtour (joint de scellement, etc) de la couche isolateur optique par exemple thermoplastique ou matière réticulé ou l'intercalaire être constitué (entièrement) de ces couches adhésives sans couche adhésive périphérique.

L'intercalaire de préférence comprend principalement voire est la séquence de couches adhésives suivantes entre les deuxième et troisième faces (avec ou sans élément fonctionnel au sein de la couche adhésive supérieure voire de la couche isolateur optique) :
- couche adhésive supérieure PVB (ou PVB/élément fonctionnel/PVB) / couche isolateur optique/ couche adhésive inférieure PVB
- ou couche adhésive supérieure PVB (ou PVB/élément fonctionnel/PVB) / couche isolateur optique/ couche adhésive inférieure de préférence thermoplastique polyuréthane TPU si deuxième feuille en verre organique
- ou couche adhésive supérieure PVB (ou PVB/élément fonctionnel/PVB) / couche isolateur optique/ couche adhésive inférieure polymère réticulé
- ou couche adhésive supérieure polymère réticulé/ couche isolateur optique/ couche adhésive inférieure PVB
- ou couche adhésive supérieure polymère réticulé / couche isolateur optique/ couche adhésive inférieure TPU si verre organique
- ou couche adhésive supérieure polymère réticulé / couche isolateur optique/ couche adhésive inférieure polymère réticulé.

De préférence la couche intercalaire supérieure et/ou inférieure (en feuillet) à base de PVB comprend de 70% à 75% de PVB, 25 à 30% de plastifiant et moins de 1% d'adjuvants. Toutefois Il existe aussi des feuillets PVB avec peu de plastifiant (notamment moins de 5%) ou sans plastifiant comme le film « MOWITAL LP BF » de la société KURARAY.

Plus simplement, l'intercalaire peut comprendre principalement la couche isolateur optique (de préférence film ou couche sur support polymère notamment poylester, PET) et au plus une couche adhésive thermoplastique ou polymère réticulé (de préférence film(s)), notamment de PVB ou EVA, entre la deuxième et la troisième face. L'intercalaire de feuilletage de préférence comprend principalement voire est la séquence de couches adhésives suivantes (avec ou sans élément fonctionnel au sein de la couche adhésive supérieure voire de la couche isolateur optique) entre les deuxième et troisième faces:
- couche adhésive supérieure PVB (ou PVB/élément fonctionnel/PVB)/ couche isolateur optique
- couche adhésive supérieure polymère réticulé / couche isolateur optique
- couche isolateur optique/ couche adhésive inférieure TPU si verre organique
- couche isolateur optique/ couche adhésive inférieure PVB
- couche isolateur optique/ couche adhésive inférieure polymère réticulé.

L'intercalaire peut comprendre principalement ces deux couches adhésives en association avec une couche adhésive périphérique sur le pourtour (joint de scellement, etc) de la couche isolateur optique par exemple thermoplastique ou matière réticulé ou l'intercalaire peut être constitué (entièrement) de ces couches adhésives sans couche adhésive périphérique.

L'intercalaire de feuilletage peut être dénuée de couche adhésive thermoplastique (en pleine surface) comme PVB ou EVA ou encore TPU en particulier en contact adhésif avec deuxième et/ou troisième face. L'intercalaire de feuilletage notamment comprend la séquence de couches adhésives suivantes entre la deuxième et troisième face :
- couche adhésive supérieure polymère réticulé / couche isolateur optique
- ou couche isolateur optique/ couche adhésive inférieure polymère réticulé.

L'intercalaire peut comprendre principalement ces deux couches adhésives polymère réticulé en association avec une couche adhésive périphérique sur le pourtour (joint de scellement, etc) de la couche isolateur optique par exemple thermoplastique ou matière réticulé ou l'intercalaire peut être constitué (entièrement) de ces couches adhésives sans couche adhésive périphérique.

La couche isolateur optique (de préférence monocouche, film ou revêtement sur support polymère, ou multicouche) peut être en contact adhésif avec la deuxième face (nue ou revêtue d'un revêtement fonctionnel notamment d'au plus 200nm) et avec la troisième face nue ou revêtue d'un revêtement fonctionnel notamment d'au plus 200nm). L'intercalaire peut comprendre principalement cette couche isolateur optique en association avec une couche adhésive périphérique sur le pourtour (joint de scellement, etc) de la couche isolateur optique par exemple thermoplastique ou matière réticulé ou être constitué (entièrement) de cette couche adhésive sans couche adhésive périphérique.

L'intercalaire de feuilletage (monocouche ou multicouche comme déjà vu) peut être dénué de couche adhésive locale en contact avec les deuxième et troisième faces sur le pourtour de la couche isolateur optique et même de la ou des autres couches adhésives (inférieure ou supérieure).

Une couche adhésive polymère réticulé selon l'invention (couche isolateur optique couches adhésive inférieure et/ou supérieure etc) peut contenir au moins 50%, 60%, 70%, 80%, 90%, 95% en poids de polymère(s) et même au plus 20%,10% 5% 2% 1% d'additifs.

Une couche adhésive polymère réticulé selon l'invention peut contenir un polymère principal (ou polymère de base) au moins 50%,60%, 70%, 80%, 90%, 95% en poids de polymère(s).

Une couche adhésive polymère réticulé selon l'invention peut comprendre d'autres additifs (de préférence moins de 10% ou 5% ou 1% en poids de couche) tels que l'un au moins des suivants :
- agent de réticulation par exemple des photoinitiateurs (résiduels),
- des plastifiants (pour plus de souplesse)
- des promoteurs d'adhésion
- des additifs pour la durabilité.

Le taux de polymérisation ou même de réticulation d'une couche adhésive polymère réticulé selon l'invention n'est pas nécessairement de 100%, la matière de la couche peut donc comporter des prépolymères, monomères, oligomères résiduels. On peut analyser en RMN (Résonance Magnétique Nucléaire) la couche après réticulation afin de déterminer le taux de polymérisation. On peut avoir un mélange de polymères.

Si nécessaire, par exemple en cas de défaut de compatibilité chimique, l'intercalaire peut incorporer un film barrière (notamment film (thermo)plastique, non adhésif) entre la couche isolateur optique et la couche adhésive supérieure (et/ou respectivement entre la couche isolateur optique et la couche adhésive inférieure). La couche barrière, en particulier thermoplastique, est au moins de la taille de la couche isolateur optique. De préférence, la couche adhésive supérieure (et/ou la couche adhésive inférieure) dépasse de la tranche de la couche isolateur optique (et du film barrière). Une couche adhésive de cadrage périphérique peut être sur le pourtour de la couche isolateur optique (notamment film thermoplastique en matière de la couche adhésive supérieure (et/ou inférieure) et même du film barrière.

Plus largement, l'intercalaire de feuilletage peut incorporer un ou plusieurs éléments fonctionnels (non adhésifs) au-dessus ou même au sein de la couche isolateur optique (et éventuellement au sein de couche adhésive supérieure ou même inférieure) qui ne participent pas (notablement) à la « cohésion » du vitrage.

Un ou plusieurs éléments fonctionnels peuvent être sous ou au sein d'une couche adhésive supérieure (thermoplastique ou matière réticulé), au sein d'une couche adhésive inférieure ou même au sein de la couche isolateur optique notamment dans une partie supérieure de la couche isolateur optique qui est au-delà de l'épaisseur minimale fonctionnelle de 600nm ou 800nm.

Par exemple, l'intercalaire de feuilletage (mono ou multicouche) peut incorporer un ou plusieurs éléments fonctionnels (de préférence films fonctionnels) notamment d'épaisseur subcentimétrique et même d'au plus 0,6mm ou 0,5mm ou 0,3 ou 0,2mm, et de préférence d'au moins 30 ou 40 ou 50µm, choisis de préférence parmi l'un au moins des films fonctionnels suivants:
- film fonctionnel (transparent, flexible, incolore ou teinté), notamment polymère, choisi parmi :
   - support polymère (thermoplastique, notamment polyester, PET) revêtu de la couche isolateur optique qui est sous forme d'un revêtement (monocouche de préférence), support entre la deuxième face (notamment F2) et la couche isolateur optique et éventuellement avec face principale adhésivée coté deuxième face (par couche polymère réticulé formant par exemple couche adhésive supérieure) ou en contact adhésif avec couche adhésive supérieure notamment thermoplastique,
   - et/ou film athermique, réfléchissant les infrarouges (contrôle solaire), et/ou chauffant par exemple substrat polymère (notamment polyester, PET) avec un revêtement électroconducteur (transparent), notamment d'épaisseur d'au plus 0,4mm, notamment local ou s'étendant sur la quasi-totalité du vitrage, notamment en face ou décalé de la zone de propagation, des moyens d'extraction de lumière, entre la deuxième face (qui est la face F2) et la couche isolateur optique, éventuellement distinct ou étant le support de la couche isolateur optique avec le revêtement électroconducteur côté opposé (vers la face F3)
   - et/ou le film barrière précité
   - au moins un film optique qui est
      - un film extracteur, notamment polymère (par exemple thermoplastique ou thermodurci), formant des moyens d'extraction de lumière guidée (dans une couche adhésive inférieure), par exemple avec reliefs et/ou diffusant en volume ou en surface (par une couche diffusante), film extracteur sur ou au sein de la couche adhésive inférieure notamment film et même thermoplastique, de préférence film polymère extracteur entre la couche isolateur optique et la couche adhésive inférieure ou au sein de la couche adhésive inférieure et faisant face à la couche isolateur optique, (plutôt que décalé de la couche isolateur optique),
      - et/ou un film dit redirecteur, notamment polymère (par exemple thermoplastique ou thermodurci), formant moyen de redirection de lumière (issue de la source de lumière coté quatrième face voire décalée du vitrage), local, (par exemple texturé, sur ou au sein de la couche adhésive inférieure notamment de préférence film redirecteur entre la couche isolateur optique et la couche adhésive inférieure ou au sein de la couche adhésive inférieure et faisant face à la couche isolateur optique ( plutôt que décalé de la couche isolateur optique)
- dispositif électronique (plus ou moins étendu) choisi parmi au moins l'un des dispositifs suivants : capteurs ; dispositif électrocommandable à teinte et/ou à diffusion variable, diodes additionnelles (émettant vers la première ou deuxième feuille), notamment local ou s'étendant sur la quasi-totalité du vitrage, notamment en face ou décalé de la zone de propagation, des moyens d'extraction de lumière, entre la deuxième face et la couche isolateur optique.

En particulier, la couche adhésive supérieure peut comporter deux films thermoplastiques -ou feuillets- par exemple à base de PVB (ou d'adhésif thermoréticulé par exemple sensible à la pression) et plus grands, que l'élément fonctionnel (notamment dispositif électronique ou film athermique) et l'élément fonctionnel est entre ces deux feuillets. En particulier pour un élément fonctionnel (film polymère, dispositif électronique etc) d'épaisseur d'au moins 0,4mm, un feuillet intermédiaire périphérique en même nature de matière que les deux feuillets, notamment à base de PVB (ou d'adhésif thermoréticulé par exemple sensible à la pression), entoure et touche la tranche de l'élément fonctionnel et est entre ces deux feuillets dépassant et en contact avec eux. Ce feuillet intermédiaire périphérique fait partie de l'intercalaire de feuilletage. Pour un élément fonctionnel d'épaisseur inférieure ou égale à 0,4mm et même 0,3mm ou 0,2mm la matière thermoplastique peut fluer suffisamment.

En particulier, la couche adhésive inférieure peut comporter deux films thermoplastiques -ou feuillets- par exemple à base de PVB ou EVA ou TPU (ou d'adhésif thermoréticulé par exemple sensible à la pression) et plus grands, que le film redirecteur et le film redirecteur est entre ces deux feuillets. Et même un feuillet intermédiaire périphérique en même nature de matière que les deux feuillets, notamment thermoplastique à base de PVB ou EVA ou TPU (ou d'adhésif thermoréticulé par exemple sensible à la pression), entoure et touche la tranche du film redirecteur et est entre ces deux feuillets dépassant et en contact avec eux. Ce feuillet intermédiaire périphérique fait partie de l'intercalaire de feuilletage.

De préférence pour tout élément fonctionnel (film notamment polymère) selon l'invention on préfère une épaisseur d'au moins 30 ou 40µm ou 50µm pour la manipulation facile lors de l'assemblage et de préférence d'au plus 500µm ou 400µm ou 300µm. En particulier un élément fonctionnel (film notamment polymère, dispositif électronique) d'épaisseur d'au plus 0,4mm ou 0,3mm ou 0,2mm n'a pas besoin d'un feuillet intermédiaire périphérique.

Si on utilise un support (polymère, non adhésif, par exemple polyester, PET) pour la couche isolateur optique (support de haut ou bas indice de réfraction par rapport à la deuxième feuille) sous forme de revêtement le support est de préférence plus éloigné que la couche isolateur optique de la troisième face (notamment face F3).

Le film fonctionnel polymère (support polymère, film optique : extracteur, redirecteur, film barrière) est par exemple thermoplastique (flexible, courbé suivant la courbure du vitrage), notamment non adhésif au verre, est par exemple : polyester, notamment polytéréphtalate d'éthylène (PET), poly(téréphtalate de butylène) PBT, poly(naphtalate d'éthylène) (PEN), , polyimide (PI), polyuréthane (PU) ou triacétate de cellulose (TAC), acrylique, polyoléfine notamment polypropylène (PP) polycarbonate (PC) ou PMMA, film (coextrudé) en PET-PMMA poly(chlorure de vinyle) PVC.

Avec un film fonctionnel polymère en PC ou PMMA, on préfère (pour davantage de compatibilité chimique) comme couche adhésive thermoplastique inférieure ou supérieure le polyuréthane thermoplastique (TPU).

On peut utiliser pour le film athermique, par exemple un film clair de PET revêtu, par exemple XIR de la société Eastman, un film coextrudé en PET-PMMA, par exemple du type SRF 3M^{®}. Naturellement un film fonctionnel polymère peut être multifonctions (support, barrière, optique etc).

Le film extracteur peut avoir une étendue à façon. Il peut être local ou couvrir au moins 50%, 60%, 70%, 80%, 90%, 100% du clair de vitre. Le film extracteur peut avoir une ou plusieurs zones d'extraction locales (texturées etc) ou occupant au moins 50%, 60%, 70%, 80%, 90%, 100% du clair de vitre (et/ou au moins 50%, 60%, 70%, 80%, 90%, 100% de la surface du film transparent). Le film extracteur peut être de taille identique ou inférieure à la couche adhésive inférieure sous jacente ou incorporant le film extracteur.

Par ailleurs, la première feuille peut être teintée et/ou une ou toute couche selon l'invention (film athermique, support polymère, film barrière, couche adhésive supérieure notamment) au-dessus de la couche isolateur optique peut être teintée et même opaque localement, hors clair de vitre. La couche isolateur optique elle-même peut être teintée et même opaque localement, hors clair de vitre. Une ou toute couche de l'intercalaire de feuilletage peut être opaque localement (en périphérie), hors clair de vitre. Le film athermique ou support polymère ou encore film barrière peut être teinté et même opaque localement (en périphérie), hors clair de vitre.

Pour ce faire, toute couche teintée et même localement opaque selon l'invention (couche isolateur optique et/ou couche au-dessus de la couche isolateur optique peut comporter (dans une matrice polymère) un agent colorant (organique ou inorganique) notamment colorant moléculaire ou pigment inorganique. Pour être opaque, on peut augmenter le taux d'agent colorant. De préférence l'agent colorant est noir.

La première feuille peut être un verre clair avec un revêtement fonctionnel athermique (contrôle solaire) sur la deuxième face qui est la face F2 et l'éventuelle couche adhésive supérieure (thermoplastique ou polymère réticulé) est teintée ou claire. La couche isolateur optique limite l'absorption de rayons guidés.

La première feuille en verre minéral peut être à base de silice, sodocalcique, de préférence silicosodocalcique, voire aluminosilicate, ou encore borosilicate, et présente de préférence une teneur pondérale en oxyde de fer total (exprimé sous la forme Fe₂O₃) d'au moins 0,4% et de préférence d'au plus 1,5%.

Pour limiter l'absorption des rayons guidés, la deuxième feuille en verre minéral peut être notamment à base de silice, sodocalcique, silicosodocalcique, ou aluminosilicate, ou borosilicate, présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%. Le rédox de la deuxième feuille de verre est de préférence supérieur ou égal à 0,15.

Un film teinté selon l'invention (film athermique, support polymère, film barrière, couche adhésive supérieure) peut avoir une transmission lumineuse d'au plus 50% ou 40% ou 30% ou 20% et d'au moins 5%.

La couche isolateur optique teintée selon l'invention peut avoir une transmission lumineuse d'au plus 50% ou 40% ou 30% ou 20% et d'au moins 5%. La première feuille peut alors être teintée ou incolore et/ou la couche adhésive supérieure teintée ou incolore.

Pour un toit de véhicule automobile on choisit par exemple un film teinté avec une transmission lumineuse de moins de 100% à 2% mieux de 28% à 8%.

Sous l'intercalaire de feuilletage (coté troisième face) on peut ajouter un ou plusieurs films optiques, de préférence local, tels que ceux précités en particulier :
- film extracteur, en contact avec la troisième face (notamment F3) ou via une couche adhésive locale, de préférence film extracteur entre la couche isolateur optique et la troisième face voire décalé de la couche isolateur optique, notamment en contact avec la couche isolateur optique
- et/ou film redirecteur, sur la troisième face ou via une couche adhésive locale de préférence entre la couche isolateur optique et la troisième face notamment en contact avec la couche isolateur optique.

Alternativement le ou les ou des films optiques sont sur la quatrième face.On peut avoir plusieurs films optiques disjoints répartis dans le clair de vitre sur une même face par exemple. Le film optique peut être un film polymère thermoplastique ou thermodurci.

Lorsqu'un film optique est posé sur la troisième face (F3), on préfère qu'il soit local pour augmenter la surface de contact adhésif de l'intercalaire de feuilletage (la couche isolateur optique ou la couche adhésive inférieure) avec la troisième face.

L'étendue du film extracteur (local) peut être significativement inférieure à celle de la deuxième feuille. Elle représente avantageusement moins de 30 %, de préférence d'au plus 25 %, en particulier entre 1 et 10 % de l'étendue de la deuxième feuille. Le film extracteur peut avoir toute forme. Il peut couvrir le clair de vitre et même ses bords sont sous la couche de masquage interne.

Alternativement, le film optique local (extracteur ou redirecteur) peut être collé par une couche adhésive de fixation transparente de préférence ayant un indice de réfraction proche de n₀ . Dans cette configuration la couche adhésive de fixation peut faire partie d'une couche adhésive plus étendue que le film optique local par exemple film PVB ou TPU ou OCA donc partie intégrante de la couche adhésive inférieure déjà citée. Cette couche adhésive de fixation ne s'étendant pas au delà du film optique on peut considérer qu'elle ne fait partie de l'intercalaire de feuilletage. Cette couche adhésive de fixation peut être entourée de la couche adhésive inférieure éventuelle et qui est d'épaisseur éventuellement distincte de cette couche adhésive de fixation.

On peut également utiliser pour le film extracteur un polymère thermoplastique et chauffer ce polymère, avant mise en contact avec la deuxième feuille, au moins localement jusqu'à son point de ramollissement pour le positionner sur une couche adhésive inférieure thermoplastique. Encore une autre possibilité consiste à former le film extracteur par RIM (reaction injection-moulding ou moulage par injection avec réaction) d'un mélange de monomères aboutissant à la formation d'un polymère thermodurci in situ.

Le film optique extracteur ou redirecteur peut être également entre la couche isolateur optique (film ou revêtement sur support polymère notamment polyester, PET) et la couche adhésive inférieure, polymère thermoplastique (PVB, EVA etc) ou polymère réticulé. La couche adhésive inférieure peut servir à fixer ce film. L'étendue du film extracteur est à façon.

De préférence, le (chaque) film optique redirecteur local est de largeur d'au plus 10cm ou au plus 5cm ou même au plus 2cm et notamment de longueur similaire à celle de la (chaque) source de lumière linéaire (à façon), notamment ensemble de diodes sur support. Ce peut être une bande rectangulaire avec des coins arrondis par exemple.

L'intercalaire de feuilletage (mono ou multicouches) peut avoir une épaisseur (en microns) d'au moins 250, 300, 350, 400, 450, 500, 550, 600, 650, 700, 750, 800, 850, 900, 950, 1000, et d'au plus 1100.

On préfère une épaisseur totale de couche(s) adhésive(s) polymère réticulé (de l'intercalaire) selon l'invention peut avoir une épaisseur (en microns) d'au moins 250, 300, 350, 400, 450, 500, 550, 600, 650, 700, 750, 800, 850, 900, 950, 1000, et d'au plus 1100.

On préfère une épaisseur totale ou de couche(s) adhésive(s) thermoplastique (de l'intercalaire) selon l'invention peut avoir une épaisseur (en microns) d'au plus 350, 400, 450, 500, 550, 600, 650, 700, 750, 800.

Pour faciliter la fabrication et pour la tenue mécanique, la couche isolateur optique sous forme de film peut avoir une épaisseur (en microns) d'au moins 30,40, 45, 50, 55, 60, 65, 70, 75, 80, 85, 90, 95, 100, 150, 200, 250, 300, 350, 400, 450, 500, 550, 600, 650, 700, 750, 800, 850, 900, 950, 1000, et d'au plus 1100.

La couche isolateur optique sous forme de revêtement sur la deuxième feuille de verre minéral courbée (bombée) peut avoir une épaisseur (en microns) d'au moins 1, 2, 3, 4, 5, 6, 7, 8, 9, 10, 15, 20, 25, 30, 35, 40, 45, 50, 55, 60, 65, 70, 75, 80, 85, 90, 95, 100, 150, 200, 250, 300, 350, 400, 450, 500, 550, 600, 650, 700, 750, 800, 850, 900, 950, 1000µm et d'au plus 1100µm.

La couche isolateur optique sous forme de revêtement sur la deuxième feuille de verre organique courbée peut avoir une épaisseur (en microns) d'au moins 1, 2, 3, 4, 5, 6, 7, 8, 9, 10, 15, 20, 25, 30, 35, 40, 45, 50, 55, 60, 65, 70, 75, 80, 85, 90, 95, 100, 150, 200, 250, 300, 350, 400, 450, 500, 550, 600, 650, 700, 750, 800, 850, 900, 950, 1000 et d'au plus 1100.

On peut préférer limiter l'épaisseur de la couche isolateur optique (de l'adhésif réticulable) déposée sur verre courbé pour maintenir une épaisseur la plus constante possible sur toute la zone de guidage. Une alternative est de déposer la couche isolateur optique par remplissage dans une cavité entre les première et deuxième feuilles.

Pour faciliter la fabrication et pour la tenue mécanique, l'ensemble couche isolateur optique sous forme de revêtement sur un support polymère, notamment polyester, PET (avec une face principale opposé éventuellement adhésivée en matière polymère réticulé) peut avoir une épaisseur (en microns) d'au moins 30, 40, 45, 50, 55, 60, 65, 70, 75, 80, 85, 90, 95, 100, 150, 200, 250, 300, 350, 400, 450, 500, 550, 600, 650, 700, 750, 800, 850, 900, 950, 1000 et d'au plus 1100.

Concernant les propriétés optiques, la couche isolateur optique ou même toute couche adhésive polymère réticulé ou thermoplastique (couche adhésive inférieure et/ou supérieure) ou même l'intercalaire de feuilletage peut présenter une transmission lumineuse d'au moins 85% ou 90% et/ou un flou inférieur à 6 %, à 5 %, à 4 %, à 3 %, à 2 %, à 1 %, à 0,5%.

Le vitrage peut présenter une transparence adaptée à son utilisation et même un flou inférieur à 6 %, à 5 %, à 4 %, à 3 %, à 2 %, à 1 %, à 0,5%.

La deuxième feuille peut être en verre organique en particulier à base de polyuréthane (PU) typiquement avec n0 de 1,47 environ, de polycarbonate (PC) typiquement avec n0 de 1,59 environ, de poly(méthacrylate de méthyle) (PMMA) typiquement avec n0 de 1,47 environ, de poly(chlorure de vinyle) (PVC) avec n0 de 1,54 environ.

Le verre organique peut être flexible pour suivre la courbure de la première feuille bombée ou encore préformé.

On choisit l'indice n1 le plus bas possible tel que n0-n1 est d'au moins 0,04.

Avec un verre organique comme le PC ou le PMMA, on préfère (pour davantage de compatibilité chimique) au PVB comme couche adhésive thermoplastique inférieure le polyuréthane thermoplastique (TPU) ou encore une matière polymère réticulé.

La première feuille de verre peut être de préférence en verre trempé si la deuxième feuille est en verre organique.

Soit nₘ l'indice de réfraction moyen de la couche isolateur optique sur une plage A de longueurs d'onde de 380nm à 750nm, soit x la variation d'indice de réfraction de la couche isolateur optique sur la plage A, x est d'au plus 30% de l'écart n0-nₘ et même au plus 20% ou au plus 10%, ceci pour contrôler la couleur de la lumière extraite. Ceci permet en particulier de limiter des variations colorimétriques entre la couleur (si polychromatique, blanche etc) de la lumière injectée et celle extraite et même une meilleure homogénéité de couleur entre différents motifs d'extractions à diverses distances de la source de lumière.

En particulier avec n0 de 1,5 dans le visible, l'indice de réfraction n1 dans le visible en particulier à 550nm et de préférence de 500nm à 750nm et même de 380nm à 750nm et/ou l'indice moyen nₘ peut être inférieur ou égal à 1,46, à 1,45, à 1,44, à 1,43, à 1,42, à 1,41, à 1,40, à 1,39, à 1,38, à 1,37, à 1,36, à 1,35, à 1,34, à 1,33, à 1,32, à 1,31, à 1,30, à 1,29, à 1,28, à 1,27, à 1,26, à 1,25. En particulier avec no d'au moins 1,55 dans le visible, l'indice de réfraction n1 dans le visible en particulier à 550nm et de préférence de 500nm à 750nm et même de 380nm à 750nm peut également être inférieur ou égal à 1,50, à 1,49, à 1,48, à 1,47.

Dans le cas d'une couche isolateur optique multicouches on peut avoir en partant de la troisième face un indice de réfraction constant avec différents matériaux ou « un gradient d'indice de plus en plus bas.

La matière polymère réticulé d'une couche adhésive polymère réticulé selon l'invention (couche isolateur optique, couche adhésive inférieure ou supérieure ou même couches décrites ultérieurement couche de cadrage, couche teintée, opaque) est à base de polymère réticulé (un ou plusieurs polymères réticulés), notamment essentiellement constitué de polymère réticulé. On préfère une matière polymère réticulé sans agent Cancérigène, Mutagène et Repro-toxique dit agent CMR.

La couche isolateur optique peut avoir une bonne adhésion au verre (minéral voire organique) de la première et/ou deuxième feuille. La couche isolateur optique, par exemple atteint une résistance au pelage pour le verre minéral (ou le verre organique) supérieure à 2N/mm, à 3N/mm, à 4N/mm, à 5N/mm, à 6N/mm, à 7N/mm, à 8N/mm, à 9N/mm, à 10N/mm.

Selon une caractéristique, la couche isolateur optique seule (film notamment) ou en combinaison avec couche adhésive polymère réticulé inférieure et/ou supérieure, présente une dureté allant de 20 shore 000 à 60 shore 000, tout particulièrement si l'intercalaire de feuilletage (de préférence comportant au moins un film adhésif polymère réticulé, et même d'au moins 30µm ou 40 ou 50µm) ne comporte pas de couche adhésive thermoplastique inférieure et/ou supérieure. Ainsi la couche adhésive polymère réticulé n'est alors ni trop molle ni trop dure pour éviter la propagation des fissures du verre d'une ou des feuilles en cas d'accident, de casse.

La dureté de la couche adhésive polymère réticulé (film ou revêtement) est mesurée selon la norme ASTM-D2240 sur un échantillon de référence présentant une épaisseur de 10 mm, l'échantillon consistant en la matière adhésive polymère réticulé (de préférence photoréticulé aux UVA) après avoir été coulé de manière liquide dans un moule creux.

Selon une autre caractéristique de préférence cumulative à la précédente, ladite couche isolateur optique seule (film notamment) ou en combinaison avec une couche adhésive polymère réticulé inférieure et/ou supérieure possède un allongement à la rupture entre 200 % et 1000 %, notamment entre 250 % et 1000 %, de préférence entre 300 % et 1000 %.

La couche isolateur optique (dépôt par voie liquide sur première et/ou deuxième feuille ou sur support) peut être réticulée tout ou partiellement avant, pendant ou après le procédé de feuilletage entre les première et deuxième feuilles (notamment feuilles de verre minéral).

La couche isolateur optique (en film) peut être réticulée tout ou partiellement avant pendant ou après le procédé de feuilletage entre les première et deuxième feuilles de verre.

Le feuilletage en l'absence de matière thermoplastique est réalisé par au moins une mise sous vide sous pression.

Pour la fabrication d'une couche adhésive polymère réticulé selon l'invention (la couche isolateur optique ou plus largement toute autre couche adhésive polymère réticulé selon l'invention couche adhésive inférieure ou supérieure; couche de cadrage, couche teintée, opaque etc), on peut utiliser des adhésifs réticulables qui durcissent lorsque leurs composants réagissent (photoréticulable notamment sous ultraviolet, thermoréticulable etc) ou lorsqu'un solvant s'évapore. Dans tous les cas il y a réaction chimique afin de créer des liaisons chimiques pour la réticulation, polymère réticulé défini alors par la formation d'un réseau 3D de chaines polymériques liées par des liaisons chimiques.

Ainsi la manière dont l'adhésif réticulable durcit dépend de sa nature, certains (photo)réticulant notamment par apport d'énergie du type ultraviolets (UVA) ou visible (400-405nm) d'autres réticulant à température ambiante avec l'ajout d'un durcisseur par réaction chimique. D'autres adhésifs réticulables sont réticulés par réaction chimique initiée et favorisé grâce à l'apport d'énergie thermique.

Un dépôt par voie liquide de l'adhésif réticulable peut se faire par pulvérisation (spray coating), par application au rideau (curtain coating), par aspersion (flow coating), par application au rouleau (roller coating), par écoulement laminaire à travers une fente (slot die), par trempage ou par coulée (dip coating), à la lame (blade coating), par sérigraphie (screen printing) ou par jet d'encre (inkjet) ou par coulée (drop casting) ou par remplissage d'une cavité avec une seringue notamment.

De préférence, la couche isolateur optique ou même plus largement toute autre couche adhésive polymère réticulé selon l'invention (couche adhésive inférieure ou supérieure; couche de cadrage, couche teintée, opaque etc) peut être de préférence photo-réticulée par ultraviolet, par exemple comporte une matrice polymère photo-réticulée par ultraviolet.

La matière polymère réticulée (de la couche isolateur optique ou même toute autre couche adhésive polymère réticulée, inférieure et/ou supérieure notamment) peut être de préférence choisi parmi un polymère à base (ou essentiellement constitué) de polyacrylate (par exemple pour avoir un indice de réfraction n1 d'au plus 1,46 ou 1,4), notamment de fluoro uréthane acrylate (par exemple pour avoir un indice de réfraction n1 le plus bas possible) ou d'uréthane acrylate ou de fluoro-silicone acrylate, de polysiloxanes ou silicone (par exemple d'indice de réfraction n1 d'au plus 1,4 ou 1,3) notamment de polydiméthylsiloxane, de polymère époxy, de polyépoxydes, de polyuréthane, d'acétate de polyvinyle, de polyester.

Le polyacrylate décrit ici désigne tout polymère contenant des unités répétitives dérivées de l'acrylate. L'unité répétitive peut être substituée ou non substituée dans la plage de valence autorisée. Le polymère acrylate peut être homopolymère et/ou copolymère. Dans ce texte, le polyacrylate comprend un ou plusieurs acrylates de polyméthyle, acrylate de polyéthylène, méthacrylate de polypropyle, polyméthacrylate de méthyle, méthacrylate de polyéthylène, méthacrylate de polyéthyle, méthacrylate de polypropyle.

Le polymère époxy décrit ici désigne le polymère obtenu après polymérisation de substances contenant des liaisons époxy. Le polymère époxy comprend un ou plusieurs époxy bisphénol A, bisphénol A époxy, époxy phénolique halogéné, époxy phénolique, époxy cycloaliphatique, résine époxy bisphénol S.

La matière polymère réticulée (de la couche isolateur optique ou même toute autre couche adhésive polymère réticulée, inférieure et/ou supérieure notamment) peut être de préférence à base (ou essentiellement constitué) d'un polymère associé à une ou d'autres fonctions tel que la fonction acrylate pour la photo-réticulation (matière polymère réticulée à base d'uréthane acrylate ou à base de silicone acrylate) et/ou la fonction fluorée pour faire chuter l'indice de réfraction en particulier pour la couche isolateur optique (matière polymère réticulée à base de fluoro-uréthane acrylate ou fluoro-silicone acrylate). Ainsi on préfère pour la matière polymère réticulé de la couche isolateur optique est un polymère de préférence à base d'acrylate, d'uréthane acrylate, de silicone, de silicone acrylate, le polymère ayant en outre avec une fonction fluorée.

Selon les propriétés recherchées, la fonction acrylate peut servir pour la photo-réticulation (pour un uréthane acrylate ou un silicone acrylate). La fonction acrylate permet la photo-réticulation du polymère, le squelette de celui est constitué d'autres fonctions tel que uréthane.

La couche isolateur optique selon l'invention (ou même toute autre couche adhésive polymère réticulée, inférieure et/ou supérieure notamment) peut en particulier être un revêtement obtenu par voie liquide et obtenu à partir une formulation de préférence photoréticulable par UV (UVA) ou encore bi composant réticulant par réaction chimique. On préfère la réticulation par UV(A) car la réticulation est plus rapide et les équipements moins couteux/plus compact que par réaction chimique.

La couche isolateur optique selon l'invention peut être un revêtement de polymère réticulé (dépôt sur troisième face ou sur support ou remplissage d'une cavité entre les feuilles) peut être de préférence à base d'uréthane acrylate ou fluoro uréthane acrylate.

Dans un premier exemple de couche isolateur optique sous forme de revêtement, on dépose une résine UV réticulable à base d'acrylates sur la deuxième feuille (de verre minéral ou organique) ou sur un support polymère.

Dans un deuxième exemple de couche isolateur optique sous forme de revêtement, on dépose une résine UV réticulable monocomposant à base d'acrylates (uréthane acrylate) sur la deuxième feuille de verre (minéral ou organique) ou sur un support polymère.

Dans un troisième exemple de couche isolateur optique sous forme de revêtement, on dépose une résine UV réticulable à base de silicone sur la deuxième feuille de verre (minéral ou organique) ou sur un support polymère.

On peut citer comme adhésif liquide réticulable bas indice (pour la couche isolateur optique) les résines suivantes :
- à base d'uréthane acrylate par exemple de la société Norland, notamment le produit dénommé LOCA Norland NOA 1315 (n1 =1,315) qui est un uréthane acrylate aliphatique,
- à base de fluoro uréthane acrylate par exemple de la société Shin-A, notamment le produit dénommé SFA 335 (n1 =1,335-1,339) ou SFA 387 (n1 =1,385-1,389),
- à base d'acrylate par exemple notamment le produit dénommé UZ181A (n1 =1,47) de la société AKChemTeck, ou encore le produit dénommé UVEKOL S15 (n1 =1,44) de la société Allnex.

On peut citer les COA liquides à base de fluoro uréthane acrylate par exemple de la société Shin-A, notamment le produit dénommé LOCA Shin-A 335 (n1 =1,335-1,339) ou 387 (n1 =1,385-1,389).

Comme déjà dit, la couche isolateur optique, qui est de préférence en contact adhésif avec la troisième face, peut être un revêtement par exemple d'épaisseur d'au moins 1µm, 10µm ou 100µm, qui sur un support polymère non adhésif (d'épaisseur submillimétrique de préférence de 20µm, 30µm, 50µm à 200µm) plus éloigné de la troisième face (face F3 de préférence) et avec une autre couche adhésive en polymère réticulé par exemple d'épaisseur d'au moins 1µm, 10µm ou 100µm sur l'autre face (face F2 de préférence) si nécessaire pour le feuilletage, autre couche adhésive en contact avec la deuxième face ou avec une couche polymère notamment thermoplastique et adhésive supérieure de l'intercalaire de feuilletage.

Sinon la couche isolateur optique peut être un revêtement sur un support qui est un substrat polymère non adhésif bas indice (d'épaisseur de 20µm, 30 µm,50µm à 200µm) plus éloigné de la troisième face (face F3 de préférence) et avec une autre couche adhésive en polymère réticulé sur l'autre face si nécessaire pour le feuilletage. Comme tel support bas indice (revêtu d'un colle adhésive isolateur optique), notamment d'indice d'au plus 1,45 dans le visible, on peut choisir un film fluoropolymère (thermoplastique). Le film en fluoropolymère peut être à base voire en l'une des matières suivantes :
- le perfluoroalkoxy PFA, notamment de n2 d'environ 1,3
- le poly(vinylidène fluoride) PVDF, notamment de n2 d'environ 1,4
- l'éthylène Chlorotrifluoroéthylène l'ECTFE
- l'éthylène tétrafluoroéthylène l'ETFE , plus précisément poly(éthylène-co-tétrafluoroéthyléne, notamment de n2 d'environ 1,4
- le copolymère éthylène propylène perfluoré FEP ou (Fluorinated Ethylene Propylene en anglais) notamment de n2 d'environ 1,3
- le polytétrafluoroéthylène PTFE notamment de n2 d'environ 1,3, mais qui est le plus difficile à laminer
- le fluorure de polyvinyle (Polyvinyl Fluoride ou PVF).

On préfère qu'il ait un flou d'au plus 2%. Un film fluoropolymère est aisément disponible à partir de 50µm. Pour un meilleur assemblage, le film fluoropolymère peut présenter une ou deux surfaces principales traitées par traitement de surface promoteur d'adhésion, de préférence un traitement corona.

La couche isolateur optique ou même plus largement toute (autre) couche adhésive polymère réticulé selon l'invention (couche adhésive inférieure ou supérieure; couche de cadrage, couche teintée, opaque etc) peut comprendre voire être un film polymère réticulé notamment d'au moins 30µm ou 40µm ou 50µm

En particulier la couche isolateur optique et/ou une couche adhésive supérieure ou inférieure en polymère réticulé est un film polymère réticulé notamment d'au moins 30µm, qui est de préférence en contact adhésif avec la troisième face et tout particulièrement
- film sensible à la pression, qui est de préférence en contact adhésif avec la troisième face (plutôt qu'avec une couche adhésive inférieure), et de préférence choisi parmi les polymères à base d'acrylate, d'uréthane acrylate ou en fluoro uréthane acrylate ou de silicone
- ou un film dit post adhésif de polymère partiellement photoréticulé avant assemblage et photoréticulé (avec une poursuite de la photoréticulation) après assemblage, et de préférence un film dit post adhésif à base d'acrylate.

La mise en contact adhésif résulte de la poursuite de la photoréticulation. Avant la poursuite de la réticulation, le vitrage assemblé est mis sous vide pour un dégazage, puis mis en autoclave sous pression -pression positive 2-4 bars-par exemple et éventuellement à une température supérieure à l'ambiante.

En particulier le film sensible à la pression (PSA en anglais pour pressure sensitive adhesive) colle par contact après application d'une pression mécanique

Un adhésif sensible à la pression, abrégé PSA et communément appelé auto-adhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif.

Comme son nom l'indique "sensible à la pression", le degré de liaison entre une surface donnée et le liant autoadhésif est influencée par la quantité de pression utilisée pour appliquer l'adhésif sur la surface cible et la nature et la densité des liaisons physiques formées entre l'adhésif et le substrat (feuille de verre minéral ou organique).

Les PSA sont généralement conçus pour former une liaison et maintenir celle-ci à la température ambiante.

Les PSA peuvent être en caoutchouc, en polyuréthane, en polymère d'ester acrylique, en polysiloxane.

Les PSA sont généralement à base d'élastomère couplé avec un agent adhésif supplémentaire approprié ou agent « tackifiant » (par exemple, une résine ester).

Les élastomères peuvent être de préférence à base:
- d'acrylates, qui peuvent être suffisamment collant pour ne pas exiger un agent tackifiant supplémentaire.
- de silicone, requérant des agents tackifiants spéciaux telles que des résines de silicate de type « MQ », composées de triméthyle silane monofonctionnel ("M") qui a réagi avec tétrachlorure de silicium quadrifonctionnel ("Q"), les PSA à base de silicone sont par exemple des gommes et résines de polydiméthylsiloxane dispersées dans du xylène ou un mélange de xylène et toluène
ou éventuellement :
- des copolymères blocs à base de styrène tel que des copolymères blocs Styrène butadiène-styrène (SBS), styrène-éthylène / butylène-styrène (SEBS), styrène-éthylène / propylène (SEP), styrène isoprène -styrène (SIS),
- les éthers vinyliques.
- de nitriles.

Des adhésifs PSA sont commercialisés sous forme de rouleaux d'adhésifs double face avec un liner sur chaque face pour protéger le film PSA.

On peut citer comme PSA à base de silicone les adhésifs de Dow Corning^{®} tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive ou les adhésifs de Taica tel que l'OPT alpha GEL^{®} tel que le K120E, K90E ou les adhésifs de MRK tel que le MR3050, MR3080.

On peut citer comme PSA à base d'acrylate les adhésifs de Nitto tel que le CS98210U, CS98210UK ou les adhésifs de Tesa^{®} tel que le OCA 69206, OCA 69208, OCA 69405.

Comme film bas indice PSA (pour la couche isolateur optique) à base d'acrylate, on peut citer le produit dénommé CS986 (n1 =1,47) de la société Nitto.

Comme film bas indice PSA (pour la couche isolateur optique) à base de silicone, on peut citer le produit dénommé Opt Alpha Gel de la société Taica (n1= 1,41).

Concernant le silicone on préfère le polydiméthylsiloxane, PDMS ou diméthicone, qui est un polymère organominéral de la famille des siloxanes.

On peut prévoir diverses configuration d'assemblage, la couche adhésive polymère réticulé supérieure et/ou inférieure est de préférence un film sensible à la pression (autoportant, rapporté) ou post adhésif ou encore un revêtement (dépôt sur la deuxième face ou sur un support identique ou distinct du support de revêtement isolateur optique).

Si la couche isolateur optique est fine par exemple d'au plus 50µm la couche adhésive polymère réticulé supérieure et/ou inférieure (si pas de couche adhésive thermoplastique) est plus épaisse.

Dans un exemple de couche adhésive polymère réticulé supérieure et/ou inférieure ou encore de cadrage sous forme de film PSA à base acrylate, on peut citer le produit dénommé CS986 de Nitto d'indice de réfraction n2 de 1,49.

Dans un exemple de couche adhésive polymère réticulé supérieure et/ou inférieure (ou encore toute autre couche adhésive: de cadrage etc) sous forme de revêtement, on dépose une résine UV réticulable monocomposant à base mercapto ester le produit dénommé-NOA 65 de la société Norland d'indice de réfraction n2 égal à 1,524.

Dans un exemple de couche de couche adhésive polymère réticulé supérieure et/ou inférieure (ou encore toute autre couche adhésive: de cadrage etc) sous forme de revêtement, on dépose une résine UV réticulable monocomposant à base de polyuréthane fluorène le produit dénommé Shin-A SBPF-022 d'indice de réfraction n2 égal à 1,60.

La couche isolateur optique (voir d'autres éléments) peut être protégée si nécessaire de l'humidité, de poussières, de l'environnement extérieur pour une meilleure durabilité.

Comme déjà vu le vitrage selon l'invention peut comporter une couche dite de cadrage qui entoure le pourtour (la tranche) de la couche isolateur optique, de préférence couche adhésive thermoplastique ou polymère réticulé en contact avec la couche isolateur optique, éventuellement en contact adhésif avec la troisième face et même avec la deuxième face (et faisant partie de l'intercalaire de feuilletage). La couche dite de cadrage est de préférence d'épaisseur au moins égale à l'épaisseur de la couche isolateur optique. Elle est par exemple de largeur d'au moins 1 mm et d'au plus 5cm ou 1cm.

La couche de cadrage peut être localement opaque (sur une bande) ou opaque sur tout le pourtour.

La couche de cadrage peut être un mastic thermodurcissable (photo réticulé bicomposant, thermoréticulé), formant joint de scellement, espacé ou accolé aux couches déjà décrites de l'intercalaire de feuilletage (elle-même en retrait des tranches des feuilles). Elle peut être en contact adhésif avec la deuxième face et la troisième face. La couche de cadrage peut être par exemple polyuréthane, époxy, butyle etc.

Dans le cas où la couche adhésive thermoplastique supérieure s'étend au-delà des bords de la couche isolateur optique, la couche de cadrage peut servir à compenser en épaisseur couche isolateur optique et même son support.

La couche de cadrage est de préférence de même nature de matière que la couche adhésive supérieure.

On peut avoir par exemple :
- couche supérieure adhésive en PVB (clair ou teinté) avec un taux nul ou plus ou moins important de plastifiants
- couche de cadrage en PVB (par exemple teinté, local ou sur tout le pourtour) avec un taux nul ou plus ou moins important de plastifiants, d'épaisseur au moins égale à l'épaisseur de la couche isolateur optique.
- éventuellement couche inferieure adhésive en PVB (clair) avec un taux nul ou plus ou moins important de plastifiants.

La couche de cadrage peut être sur la zone d'injection ou le début de la zone de propagation s'il est teinté pour des raisons décrites plus tard.

La couche de cadrage peut encadrer la zone de propagation elle est de préférence hors zone clair de vitre.

Il est préférable et même généralement indispensable que le vitrage comporte au moins une zone transparente, appelée « clair de vitre » ou clair de jour, non couverte par une couche de masquage opaque (interne), périphérique. Le clair de vitre est ainsi une zone centrale.

Ce clair de vitre représente généralement au moins 20%, de préférence au moins 50% et en particulier au moins 70% ou 80% ou 90% ou 95% de la surface totale du vitrage, y compris les zones couvertes par une encapsulation ou des joints. Autrement dit, la couche opaque couvre une zone qui représente généralement au plus 80%, de préférence au plus 50% et en particulier au plus 30% ou 20% ou 10% ou 5% de la surface totale du vitrage.

La densité optique de la couche opaque est de préférence d'au moins 2 et même jusqu'à 5. L'intercalaire de feuilletage peut occuper au moins 70%, 80%, 90%, 95% ou même 100% de la surface du vitrage.

La couche isolateur optique s'étend de préférence au-delà de la zone de propagation, notamment formant seule l'intercalaire de feuilletage, et peut occuper au moins 70%, 80%, 90%, 95% de la surface du vitrage.

Concernant l'étendue des éléments, plusieurs configurations sont possibles, notamment la tranche de l'intercalaire de feuilletage (tranche de la couche isolateur optique, de la couche adhésive inférieure et/ou supérieure ou même couche adhésive de cadrage) n'est pas forcément alignée avec la tranche des première et/ou deuxième feuilles et les tranches des couches de l'intercalaire même ne sont pas forcément alignées entre elles.

La couche adhésive supérieure (et/ou la couche isolateur et/ou l'éventuelle couche adhésive inférieure) peut être en retrait de la tranche de la première feuille d'au plus 10mm voire d'au plus 2mm. La tranche de la couche adhésive supérieure peut être alignée avec la tranche de la couche isolateur ou dépassant de la couche isolateur comme déjà vu.

La couche adhésive supérieure (et la couche isolateur et l'éventuelle couche adhésive inférieure) peut occuper au moins 70%, 80%, 90%, 95% de la surface du vitrage.

Il peut y avoir plusieurs zones d'injections, plusieurs sources de lumières, périphériques de préférence.

La couche isolateur optique s'étend de préférence au-delà de la zone de propagation et de préférence sur les moyens d'extractions (en contact ou non) et même occupe au moins 70%, 80%, 90%, 95% de la surface du vitrage. Les moyens d'extractions couvrent par exemple au plus 90% de la surface du vitrage.

La couche isolateur optique peut s'étendre en amont de la zone de propagation au-dessus dudit trou (et occupe au moins 90% de la surface du vitrage).

La couche isolateur optique peut s'étendre en aval de la zone d'injection.

Le vitrage peut donc comporter entre la deuxième face (notamment F2) et la troisième face (notamment F3), une couche de masquage périphérique opaque, interne, notamment un émail (noir etc) sur la deuxième face ou un revêtement sur l'intercalaire de feuilletage par exemple revêtement opaque (à base de PVB et avec agent colorant) sur une face principale d'un PVB côté deuxième ou troisième face.

La couche de masquage interne peut être à 2mm ou 3mm (moins de 5 mm) de la tranche du vitrage ou même jusqu'à la tranche. La couche de masquage peut être un bandeau encadrant le vitrage (pare-brise, toit, etc) notamment noir. On opacifie sur toute la périphérie pour cacher des éléments de carrosserie ou joints ou protéger une colle pour le montage sur le véhicule. Cette couche de masquage interne notamment est en contact avec la deuxième face principale. Cette couche de masquage interne délimite notamment le clair de vitre. Il peut être avantageux que le bord externe de la couche isolateur optique ou plus largement toute couche adhésive de l'intercalaire de feuilletage soit masqué par la couche de masquage interne, ne soit pas dans le clair de vitre. Il peut être avantageux que les bords externes et même internes de la couche de cadrage ou soient masqués par la couche de masquage interne, ne soient pas dans le clair de vitre, que la couche de cadrage soit sous la couche de masquage interne.

La largeur de la couche de masquage interne le long des côtés d'un toit de véhicule automobile est généralement inférieure à celle à l'avant ou même à l'arrière.

En particulier dans le cas où la première feuille est le vitrage extérieur (donc la deuxième feuille est le vitrage intérieur), une autre couche de masquage, dite intérieure, peut être en quatrième face dite F4 côté habitacle notamment faisant face à la couche de masquage interne (et même de nature identique par exemple un émail notamment noir sur deuxième feuille en verre minéral). Elle peut être adjacente à un revêtement fonctionnel éventuel transparent notamment athermique, au moins dans le clair de vitre.

En particulier pour un toit automobile (première feuille est le vitrage extérieur):
- la largeur de la couche de masquage interne (et même intérieure) le long des bords longitudinaux peut être d'au plus 30cm notamment de 10-20cm.
- la largeur de la couche de masquage interne (et même intérieure) le long du bord latéral arrière peut être d'au plus 30cm notamment d'au moins 1 ou 5cm et le long du bord latéral avant d'au plus 60cm notamment d'au moins 1 ou 5cm.

Les bords longitudinaux et/ou les bords latéraux ne sont pas nécessairement parallèles entre eux.

La largeur de la couche de masquage interne est de préférence plus grande que celle de la couche de masquage intérieure. La couche de masquage intérieure est notamment congruente ou de largeur inférieure à la largeur de la couche de masquage interne.

La couche de masquage interne et/ou intérieure peut être un liant organique ou minéral (fritte de verre fondue) avec un agent colorant organique ou inorganique notamment colorant moléculaire ou pigment inorganique.

La couche de masquage interne et/ou intérieure est de préférence une couche continue (aplat avec un bord plein ou en variante un bord en dégradé (ensemble de motifs).

Dans un premier cas d'injection de lumière, la source de lumière est couplée à la tranche de la deuxième feuille éventuellement dans une encoche périphérique débouchante. La source de lumière peut être logée dans une encapsulation polymère comme décrit dans la demande WO2010049638 notamment en figure 15 ou en figure 16 et même ayant un évidement pour retrait, remplacement de la source.

Dans un deuxième cas d'injection de lumière, la deuxième feuille, notamment en verre minéral, peut comporter au moins un trou périphérique (traversant ou même borgne en épaisseur, ouvert coté quatrième face au moins) sous la couche de masquage interne (hors clair de vitre) et la source de lumière est couplée à la paroi de la deuxième feuille délimitant le trou, de préférence logée dans le trou. La source de lumière notamment les diodes peut être dans le trou, peut être associée à un élément optique (guide de lumière) entre la paroi d'injection et la source de lumière dans le trou ou à l'intérieur de l'habitacle. On peut citer notamment les exemples de réalisations décrits dans les brevets WO2018/178591 ou WO 2013/110885.

La couche de masquage intérieure est par exemple de part et d'autre dudit trou (de chaque trou).

La deuxième feuille peut avoir une pluralité des trous (traversants) délimités chacun par une paroi interne, et une source de lumière (toutes identiques ou non, à façon) est couplée à une paroi interne et même logée dans chaque trou (traversant).

Le trou (chaque trou) est de préférence de largeur d'au plus 50mm et d'au moins 10mm et espacé de préférence d'au plus de la tranche de la deuxième feuille de 200mm. La forme du trou (de chaque trou) peut être oblongue, circulaire.

Le trou dans la deuxième feuille de verre (minéral) dans lequel est logée la source de lumière (les diodes) peut être avantageusement fermé par un couvercle, de préférence un couvercle amovible, préférentiellement intégré à un module de diodes, fixé sur la tranche interne du trou et/ou sur la quatrième face principale (par des moyens de fixation réversible).

Un trou traversant ou borgne de l'intercalaire de feuilletage (allant jusqu' à la deuxième face) peut être dans la continuité du trou choisi traversant de la deuxième feuille de verre et être de même largeur et forme.

L'alimentation en électricité de la source de lumière (des diodes) peut se faire par une amenée de courant intégrée dans le vitrage feuilleté, par exemple un fil électrique incorporé dans l'intercalaire de feuilletage, ou bien ce fil électrique peut être appliqué sur la quatrième face principale de la deuxième feuille (feuille intérieure, côté habitacle), et éventuellement être protégé par un cache.

La couche isolateur optique s'étend en amont de la zone de propagation au-dessus dudit trou (et occupe de préférence au moins 80 ou 90% de la surface du vitrage). Le trou si traversant est obstrué par un capot notamment formant joint d'étanchéité empêche l'humidité de pénétrer dans la vitre à travers l'évidement, côté troisième face, notamment réfléchissant feuille métallique (aluminium etc) ou un film (plastique ou minéral) métallisé.

Le capot forme aussi un obturateur optique. Le capot dépasse de la paroi interne du trou de préférence d'au plus 30mm.Il peut être posé sur la troisième face ou adhésivé et/ou en contact adhésif avec l'intercalaire. Le trou et/ou le capot et/ou le couvercle est par exemple au plus 100mm du clair de vitre et de préférence au moins 10 ou 20 mm.

La couche isolateur optique peut s'étendre sur le capot et même au-delà.

La couche de cadrage peut couvrir le trou et le capot éventuel.

Dans un troisième cas d'injection de lumière, la source de lumière est côté quatrième face, en regard ou décalé de la quatrième face principale, notamment sous (en vis-à-vis) de la couche de masquage interne, et est couplée à la deuxième feuille via un film optique redirecteur comme déjà décrit côté et même sur la troisième face ou coté et même sur la quatrième face.

La source de lumière peut être en couplage optique direct ou par l'intermédiaire d'une optique. La source de lumière côté quatrième face peut être associée à une optique de collimation. La source de lumière avec un collimateur éventuel peut être fixée sur la quatrième face, par collage direct ou en étant espacé et sur un support périphérique fixé sur la quatrième face.

La couche de masquage périphérique intérieure éventuelle (en face F4) peut comporter une épargne pour ne pas bloquer le couplage optique notamment pour laisser passer les rayons de la source de lumière vers l'élément de redirection de lumière.

La couche de cadrage notamment opaque peut couvrir l'élément de redirection de lumière (film redirecteur).

L'injection/le couplage est via l'élément de redirection de lumière notamment film redirecteur texturé sur la deuxième feuille notamment intérieure (troisième face ou quatrième face), par exemple un film polymère prismatique, la source de lumière étant en regard de la quatrième face, éventuellement décentrée ou même décalée de ce film redirecteur. Ce film redirecteur est en contact direct (posé sur) ou lié à la deuxième feuille notamment la face F3.

Ce film redirecteur (transparent) est par exemple de forme longitudinal le long du vitrage ou arrondi dans les coins, par exemple de la longueur du clair de vitre. Ce film redirecteur peut être d'épaisseur 'd'au plus 0,5mm ou 0,4mm et notamment d'au moins 50µm ou 80 µm ou 100µm. La source de lumière et l'élément de redirection de lumière peuvent être décalés d'un clair de vitre, faisant face à une couche de masquage interne. L'élément de redirection ( film redirecteur) et/ou la source de lumière est par exemple à au plus 100 mm du clair de vitre et/ou de préférence au moins 10 ou 20 mm.

Par ce film redirecteur (sur troisième face), la lumière traversant la deuxième feuille de verre est redirigé dans la deuxième feuille de verre par réflexion, voire diffusion. Par ce film redirecteur sur la quatrième face, la lumière traversant la deuxième feuille de verre est redirigé dans la deuxième feuille de verre par réfraction, voire diffusion.

Le film optique redirecteur peut être un film texturé et même prismatique (avec une surface principale lisse (non texturé, non fonctionnelle) et une surface opposée texturée, fonctionnelle, flexible donc courbé s'adaptant à la courbure du vitrage, un film plastique transparent partiellement structuré formant des (micro)prismes ou un film plastique (plan) transparent avec sur une surface principale une couche transparente avec un arrangement de (micro)prismes. Les (micro)prismes sont orientés vers la troisième face (F3) ou vers la deuxième face (F2).

Le film (optique redirecteur) prismatique peut être côté et même sur la troisième face (nue ou revêtue) ou côté et même sur la quatrième face (nue ou revêtue). Le film prismatique côté et même sur la troisième face peut être réflecteur et les (micro)prismes réflecteurs sont par exemple orientés vers la deuxième face (F2).

Ce film optique texturé peut être collé à la troisième face directement ou via au moins une couche adhésive notamment thermoplastique réticulé ou tenu par succion (interaction forte), notamment par la pression de l'assemblage. Le film optique texturé est posé sur la troisième face et après aspiration de l'air, il y a effet ventouse. De préférence, la couche isolateur optique ne sert pas à coller ce film redirecteur à la face F3.

La matière du film optique texturé (film prismatique, redirecteur) peut être comme celle du support de la couche isolateur optique. Le support de la couche isolateur optique (sous forme de revêtement) peut former tout ou partie du film optique texturé, avoir une zone texturée formant film prismatique, adjacente à la couche isolateur optique, collé ou posé sur la troisième face (face F3).

En résumé, le vitrage peut comporter au moins un film optique qui est entre la couche isolateur optique et la troisième face, et même en contact avec la couche isolateur optique, de préférence collé à la troisième face par une couche adhésive inférieure de l'intercalaire de feuilletage ou film optique local collé par une couche adhésive de fixation locale, et le film optique, notamment polymère, est choisi parmi :
- film dit extracteur, formant moyen d'extraction de lumière guidée dans la deuxième feuille ou dans une couche sous jacente à la couche isolateur optique (film extracteur local sur troisième face formant moyen d'extraction de lumière guidée dans la deuxième feuille ou encore film extracteur plus étendu, et même éventuellement film barrière, sur couche adhésive inférieure formant (autre) moyen d'extraction de lumière guidée dans la couche adhésive inférieure)
- et/ou film redirecteur, local, formant moyens de redirection de lumière dans la deuxième feuille de verre issue d'une source de lumière coté quatrième face voire décalée du vitrage.

La couche de masquage interne n'est pas forcément suffisamment opaque ne pas voir de la lumière parasite, la source de lumière. On peut souhaiter un élément opaque interne, périphérique et entre la deuxième et troisième face, notamment entre cette couche de masquage interne (délimitant le clair de vitre) et la troisième face ou même remplaçant cette couche de masquage interne, notamment de masquage interne d'une zone d'injection de lumière via un trou dans la deuxième feuille formant guide de lumière, de préférence vitrage intérieur, ou d'une source de lumière coté quatrième face, la deuxième feuille de préférence étant un vitrage intérieur et forme guide de lumière.

L'élément opaque interne est par exemple décalé du clair de vitre, ou va jusqu'au clair de vitre voire dépasse légèrement (de la couche de masquage interne) d'au plus 10mm.

Dans la deuxième configuration d'injection, l'élément opaque interne masque la zone d'injection (trou, le capot éventuel, la source de lumière et même le couvercle) voire même s'étend au-delà du périmètre du trou voire même du capot (ou du couvercle), d'au plus 10cm ou 5cm ou 3cm du trou et même du capot (ou du couvercle) ou si nécessaire d'au plus 5mm ou 1mm pour ne pas absorber des rayons utiles, de préférence élément opaque interne sur tout le pourtour du trou et même du capot (ou du couvercle).

Pour la troisième configuration d'injection, l'élément opaque interne masque la source de lumière (les points lumineux de la source) qui est côté quatrième face (F4) voire masque l'élément de redirection de lumière (film optique redirecteur) en regard de la source de lumière. L'élément opaque interne peut s'étendre du bord interne (vers le centre du vitrage) de l'élément de redirection de lumière (film optique redirecteur) et même du bord externe (vers la tranche du vitrage) de l'élément de redirection de lumière, par exemple d'au plus 10cm ou 5cm ou 3cm ou si nécessaire d'au plus 5mm ou 1 mm pour ne pas absorber des rayons utiles.

Dans la première configuration d'injection, cet élément opaque interne peut servir alternativement de masquage de la lumière sortant en première face (F1 de préférence) dans la zone périphérique (de la couche de masquage interne), l'élément opaque interne s'étend d'au plus 10cm ou 5cm ou 1cm en particulier de 1 mm ou 5 mm à 1 ou 3cm de la tranche d'injection, on ajuste si nécessaire pour ne pas absorber des rayons utiles.

On préfère un élément opaque interne de couleur identique ou similaire à la couche opaque de masquage interne (éventuelle) notamment noir.

Cet élément opaque interne, de préférence noir, et de préférence sous la couche de masquage interne noire, est choisi parmi :
- une pièce au sein de l'intercalaire (noire, avec revêtement noir, pièce métallique, polymère etc)
- ou un film notamment polymère (non adhésif) inséré au sein de l'intercalaire, notamment film teinté (film (thermoplastique) opaque en masse ou avec une couche opaque par exemple support de la couche isolateur optique (adjacente) ou film athermique localement opaque au sein de l'intercalaire
- ou une couche adhésive polymère réticulé : zone (hors clair de vitre) de la couche adhésive supérieure ou inférieure (localement opaque ou sur tout le pourtour), ou couche de cadrage (localement opaque ou sur tout le pourtour)
- ou couche adhésive thermoplastique comme le PVB (zone -hors clair de vitre- de la couche adhésive inférieure ou supérieure localement opaque ou sur tout le pourtour)
- un revêtement, notamment à base de PVB et avec sur une couche d'intercalaire thermoplastique PVB par exemple sur une zone-hors clair de vitre- de la couche adhésive supérieure.

L'élément opaque interne peut être espacé de la troisième face, par exemple sur couche isolateur optique ou sur couche adhésive inférieure (PVB, EVA TPU) ou sur la troisième face Dans la deuxième configuration, l'élément opaque interne peut s'étendre en amont de la zone d'injection (en amont du trou) jusqu'à la tranche du vitrage ou au moins 1cm ou 5mm de la tranche.

Dans la troisième configuration, l'élément opaque interne peut s'étendre en amont de la zone d'injection (du bord externe de l'élément de direction de lumière) jusqu'à la tranche ou au moins 1cm ou 5mm de la tranche du vitrage.

De préférence pour la deuxième et troisième configuration, cet élément opaque interne peut s'étendre au début de la zone d'injection sans absorber les rayons utiles s'il est sur la couche isolateur optique. Cet élément opaque interne peut être une zone localement opaque de la couche isolateur optique.

L'élément opaque interne peut être même forme que le capot que le trou, que la source de lumière côté face F4.

Cet élément opaque interne peut être de même forme que la forme du trou ou avoir tout autre une forme (géométrique) simple : carré, rectangulaire, oblongue etc.

La surface de l'élément opaque interne est par exemple homothétique à celle du trou ou encore à celle de la source de lumière (linéaire) côté face F4 ou même de l'élément de redirection de lumière.

Cet élément opaque interne peut être de forme longitudinale par exemple une bande et peut masquer plusieurs trous (adjacents ou sur bords distincts). Cette bande peut masquer plusieurs trous (adjacents ou sur bords distincts) ou plusieurs sources de lumière notamment linaires (deuxième configuration). Cet élément opaque interne peut être une ou plusieurs bandes disjointes notamment de part et d'autre du clair de vitre ou encore un cadre notamment (au moins partiellement) décalé du clair de vitre.

Cet élément opaque interne peut de préférence avoir une transmission lumineuse de moins de 5 %, de préférence encore de moins de 2 %, de 1% ou de 0,5% voire nulle.

Un exemple de PVB opaque comportant des pigments noirs est le produit dénommé RB17830000 Vanceva absolute black^{®} vendu par Saflex.

Un exemple de couche opaque est une couche adhésive contenant un colorant moléculaire dissout dans la matière polymère réticulé.

Comme déjà dit, le vitrage selon l'invention peut comprendre une source de lumière périphérique, notamment sous la couche de masquage interne, en couplage optique avec la deuxième feuille formant guide de lumière (deuxième et troisième configuration d'injection seulement) de préférence vitrage intérieur, et la zone de couplage est de préférence sous la couche de masquage interne.

Il peut être nécessaire d'absorber la lumière sortant en quatrième face (F4 par exemple) aux abords de la zone d'injection et formant un halo lumineux.

Pour ce faire, le vitrage selon l'invention peut comprendre un élément opaque dit anti-halo en bordure de la zone d'injection de lumière, avec contact avec la troisième face (sur la troisième face ou sur une couche adhésive thermoplastique ou réticulée), élément opaque anti-halo de préférence de largeur d'au plus 10cm dans la zone de propagation jouxtant la zone d'injection et/ou un autre élément opaque anti-halo en contact avec la quatrième face et faisant face à une bordure d'une zone d'injection de la lumière dans le guide de préférence de largeur d'au plus 10cm.

Ainsi cet élément opaque anti-halo (et/ou cet autre élément anti halo) en regard de la zone de guidage attenante à la zone d'injection peut s'étendre sur au moins 2cm et à partir de 5mm,et plus précisément :
- débuter à moins de 1mm de la paroi d'injection (délimitant le trou), en particulier s'étend de 2 ou 5mm de la paroi d'injection et juqu'à 10 cm ou 5cm de la paroi d'injection
- débuter à moins de 1mm du bord interne de l'élément de redirection de lumière (film redirecteur), en particulier, s'étend de 2 ou 5mm du bord interne et juqu'à 10 cm ou 5cm du bord interne.

Cet élément opaque anti halo (et/ou cet autre élément anti halo) peut de préférence avoir une transmission lumineuse de moins de 5 %, de préférence encore de moins de 2 %, 1% ou 0,5% voire nulle.

Cet élément opaque anti halo et/ou cet autre élément anti halo) est de préférence noir et la couche de masquage interne est noire.

Cet autre élément opaque anti halo (de préférence noir et avec la couche de masquage interne noire, est en contact avec la quatrième face est par exemple un revêtement opaque par exemple un émail.

Cet élément opaque anti halo (et/ou autre élément opaque anti halo) peut être de forme longitudinale par exemple une bande et couvrir plusieurs bordures de zones d'injection. Ce peut être une ou plusieurs bandes de part et d'autre du clair de vitre ou encore un cadre décalé du clair de vitre.

L'élément opaque interne et/ou l'élément opaque anti halo et/ou autre élément opaque anti halo peut aussi s'étendre jusqu'au bord de la deuxième feuille et même couvrir la tranche (hors tranche de couplage) de la deuxième feuille.

Cet élément opaque anti halo (et/ cet autre élément opaque anti halo) peut de préférence avoir une transmission lumineuse de moins de 5 %, de préférence encore de moins de 2 %, de 1% ou de 0,5% voire nulle.

Cet élément opaque anti halo (et/ cet autre élément opaque anti halo) peut avoir une zone annulaire ou de portion d'anneau sur une partie du périmètre du trou par exemple sur 120° ou 180°.

Cet élément opaque anti halo (de préférence noir) et avec la couche de masquage interne noire, est en contact avec la troisième face choisi parmi :
- ou un film (non adhésif) teinté (film (thermoplastique) opaque en masse ou avec une couche opaque par exemple support de la couche isolateur optique (adjacente) ou film athermique localement opaque) au sein de l'intercalaire
- ou une couche adhésive polymère réticulé :zone (hors clair de vitre) de la couche adhésive inférieure (localement opaque ou sur tout le pourtour), ou couche de cadrage (localement opaque ou sur tout le pourtour)
- ou couche adhésive thermoplastique comme le PVB (zone -hors clair de vitre- de la couche adhésive inférieure localement opaque ou sur tout le pourtour)
- un revêtement coté troisième face, notamment à base de PVB et avec sur une couche d'intercalaire thermoplastique PVB par exemple sur une zone-hors clair de vitre- de la couche adhésive inférieure,
- une pièce sous l'intercalaire (noire, avec revêtement noir, pièce métallique, polymère etc). Un élément opaque anti halo peut être une couche adhésive contenant un colorant moléculaire dissout dans la matière polymère réticulé.

En mettant à la fois un élément opaque anti halo sur la troisième face et l'autre élément opaque anti halo en quatrième face, cela peut être plus efficace et on peut raccourcir la distance nécessaire car chacun absorbe la moitié des rayons l'un vers le haut, l'autre vers le bas, alors que si l'on n'en met qu'un ça absorbe d'abord la moitié, puis l'autre moitié une fois qu'elle s'est réfléchie.

Naturellement, on peut avoir un élément à la fois de masquage de la lumière sortant en quatrième face et de la lumière sortant en première face.

On peut avoir un élément opaque interne suffisamment étendu (et alors en contact avec la troisième face) pour former ledit élément anti halo par exemple dépassant du trou (capot), de l'élément de redirection de lumière.

De manière avantageuse, l'élément opaque interne sur la troisième face et/ou l'élément opaque anti halo peut être d'indice de réfraction n'1 dans le visible tel que :
- n0-n'1 est d'au moins 0,04 dans le visible et même d'au moins 0,1,
- l'écart en valeur absolue n'1-n1 est d'au plus 0,04 dans le visible et même d'au plus 0,01.

Si n'1<n1 alors il y a un gain en extraction si n'1>n1 alors il y a plus d'efficacité pour le halo Cet élément peut être une zone opaque de la couche isolateur optique (teintée ou incolore) alors n'1 correspond à n1.

Les couleurs sont normalement caractérisées par des coordonnées colorimétriques, par exemples L*a*b*, le noir étant généralement associé à une clarté L* inférieure à une certaine valeur, de préférence à 5 ou à 10 laquelle peut dépendre du cas de figure. De préférence, L* de la couche de masquage interne (ou intérieure) et/ou d'un élément opaque interne ou antihalo (ou autre élément opaque antihalo) est inférieur à 5.

Les moyens d'extraction de lumière (guidée dans la deuxième feuille) peuvent comprendre un film optique entre la couche isolateur optique et la troisième face, de préférence sur la troisième face ou la quatrième face (si deuxième feuille vitrage intérieur).

Un exemple de film à reliefs réfléchissants notamment de film plastique d'indice de réfraction supérieur ou égal à n0 avec des reliefs (prismes) réfléchissants formant extraction de lumière sur la troisième face d'un toit automobile est décrit dans le brevet WO2013/167832.

Le relief réfléchissant de préférence a une faible rugosité de façon à ce que la réflexion soit essentiellement de type spéculaire. Le relief et rugosité de l'interface réfléchissante sont choisis de manière à ce que les largeurs totales à mi-hauteur de la distribution angulaire de l'intensité lumineuse émise par le système soient comprises de préférence entre 30° et 60°.

Indépendamment de la rugosité de l'interface réfléchissante, on peut définir une hauteur ou profondeur du relief qui est égale à la distance entre le point le plus haut et le plus bas dudit relief. La hauteur du relief réfléchissant est par exemple comprise entre 5 µm et 1 mm, de préférence entre 10 µm et 500 µm, en particulier entre 20 et 100 µm.

De tels films polymères texturés par un relief sont disponibles sur le marché et l'on peut citer par exemple le film Vikuiti^{®} Image Directing Film II commercialisé par la société 3M

On peut également former un revêtement minéral ou organo-minéral à base de silice avec les reliefs, par voie sol-gel.

Le film optique extracteur peut comprendre une pluralité de prismes individuels, constitués chacun d'une surface oblique et d'une surface essentiellement perpendiculaire au plan général de la deuxième feuille

On peut citer à titre d'exemple de relief régulier un relief de type lentille de Fresnel ou un relief de type prisme de Fresnel.

Le relief peut être réfléchissant par un revêtement de bas indice ayant un indice de réfraction inférieur d'au moins 0,04, de préférence d'au moins 0,1 à l'indice n₀ de la deuxième feuille de verre ou à l'indice du film optique à reliefs. Le relief peut être réfléchissant par la couche isolateur optique. Les creux des reliefs peuvent être sinon comblés par de la silice poreuse.

Les moyens d'extractions peuvent également être un revêtement à relief par exemple une couche de silice avec reliefs (reliefs tels que précités).

Alternativement ou cumulativement, les moyens d'extraction de lumière guidée dans la deuxième feuille peuvent comporter une couche diffusante sur la troisième et/ou quatrième face. Cette couche diffusante comprend des éléments diffusants dans une matrice (transparente et même diffusante), notamment définissant au moins une première zone diffusante par exemple de largeur d'au moins 0,5mm, notamment première zone diffusante pleine et/ou comportant un ensemble de motifs discontinus.

Les moyens d'extraction de la lumière guidée dans la deuxième feuille peuvent être également une zone dépolie de la deuxième feuille (troisième ou quatrième face) ou bien un revêtement diffusant appliqué sur la troisième ou quatrième face ou bien sur la face de l'intercalaire de feuilletage en contact avec la troisième face. Les moyens d'extraction de la lumière peuvent être, par exemple, une zone texturée, rugueuse, dépolie de la deuxième feuille (troisième ou quatrième face) II peut également s'agir d'une zone gravée dans l'épaisseur de la deuxième feuille ou encore d'éléments diffusants, tels que des particules ou fibres de verre, incorporés dans l'intercalaire.

Les particules diffusantes peuvent avoir une taille de l'ordre du micromètre dans un liant, organique ou minéral, permettant de faire adhérer ces particules à la surface de la deuxième feuille ou encore de l'intercalaire. Les particules peuvent être en métal ou en oxyde métallique.. La source de lumière est de préférence un ensemble de diodes électroluminescentes (sur un support à circuit imprimé comme un PCB pour « printed circuit board » en anglais par exemple flexible), notamment une barrette droite ou courbée, ou encore source de lumière qui comprend une fibre optique extractrice couplée avec source primaire de lumière (diode(s) électroluminescentes) etc). De préférence les diodes sont des composants montés en surface sur la face avant d'une carte de circuit imprimé dit carte PCB (avec pistes conductrices). Les même les diodes ont par exemple une émission lambertienne ou quasi lambertienne. La largeur (ou longueur) d'une diode avec une seule puce semi conductrice, généralement diode de forme carrée, est de préférence d'au plus 5mm. La largeur de la carte PCB, en barrette, est de préférence d'au plus 5cm, mieux d'au plus 2cm, et même d'au plus 1cm.

Les moyens d'extraction côté troisième face peuvent être totalement opaques ou rester transparents. En quatrième face, les moyens d'extraction ont une transmission lumineuse non nulle.

On peut avoir une ou plusieurs sources de lumière (périphériques, de préférence décalées du clair de vitre), plusieurs ensembles de diodes. La ou les sources sont allongées, linéaires sur au moins 10cm et/ou plus locales notamment dans un trou ou plusieurs trous disjoints de la deuxième feuille. On peut utiliser une ou plusieurs sources de lumière (identiques ou non), par exemple électriques et/ou constituées de dispositif(s) électroluminescent(s) (DEL, ...). La ou les sources de lumière peuvent être mono- (émettant dans le bleu, vert, rouge, etc) ou polychromatiques, ou être adaptées ou combinées pour produire par exemple une lumière blanche, etc; elles peuvent être continues ou discontinues, etc.

La source de lumière peut être étendue linéairement (bande rectangulaire comme une barrette de diodes) le long d'un coté du vitrage (bords longitudinaux) ou dédoublée (avec lumière similaire ou distincte par exemple autre couleur intensité, piloté indépendamment ou simultanément) le long des deux côtés.

L'invention porte aussi sur un véhicule automobile incorporant le vitrage lumineux défini précédemment.

En position montée dans le véhicule automobile, dans le cas d'un toit feuilleté la quatrième face est la face intérieure du véhicule automobile classiquement dénommée face F4. Le toit peut être ouvrant ou fixe.

La première feuille peut être la feuille externe en particulier, le vitrage est choisi parmi un toit, un pare-brise, une vitre latérale, ou la première feuille est la feuille interne en particulier, le vitrage est choisi parmi un pare-brise, une vitre latérale, une lunette arrière, un vitrage de porte arrière.

L'assemblage désigne l'empilement des différents éléments.

Le feuilletage comporte une opération qui permet la mise en contact adhésif de l'intercalaire de feuilletage avec les deuxième et troisième faces. Si l'intercalaire est adhésive la mise en contact adhésif s'opère par simple mise en contact avec les deuxième et troisième faces.

Si l'intercalaire est composite (par exemple deux types d'adhésifs de polymère réticulé ou un adhésif polymère réticulé et un adhésif thermoplastique l'opération de feuilletage peut être en deux étapes : 1) mise en contact adhésif de la couche isolateur optique avec la deuxième face à une température et/ou une pression et 2) mise en contact adhésif de la couche adhésive supérieure avec la troisième face à une température et/ou une pression distinctes de l'étape 1) (ou étapes 1) et 2) inversées).

De préférence le feuilletage comporte à minima un dégazage/mise sous vide des éléments assemblés (déjà en contact adhésif ou en contact non adhésif) pour éviter le bullage et on applique une pression aux éléments assemblés.

Après assemblage, le feuilletage peut impliquer ainsi par exemple un dégazage (étuve etc) et un autoclavage (pression positive). Le feuilletage peut impliquer une étape de (photo)réticulation de couche(s) adhésive(s), éventuellement déjà partiellement photoréticulé(es) avant l'assemblage, par exemple à l'aide d'une source UVA

Le cycle d'autoclave peut être à une température ambiante, à une température dans une gamme allant de 30-50°C à une pression dans une gamme allant 2-5bars et pendant une durée d'au plus 1h notamment d'au moins 15min.

Le feuilletage pour une couche thermoplastique telle que PVB comporte une mise sous vide, et une mise sous pression avec un chauffage, l'étape de feuilletage conduisant à la mise en contact adhésif de la couche avec le verre attenant.

La fabrication du vitrage feuilleté selon l'invention peut comprendre pour la formation de la couche isolateur optique :
- le dépôt d'adhésif réticulable de la couche isolateur optique par voie liquide sur la troisième face avant feuilletage (avant assemblage ou par remplissage d'une cavité entre deuxième et troisième face).

Il est possible d'utiliser un adhésif thermoréticulable qui réticule grâce à la température appliquée lors du feuilletage du vitrage feuilleté.

Si l'adhésif réticulable (par UV ou alors bi composant réticulable par réaction chimique) est déposé sur une surface, une étape de pré réticulation (UV ou avancement de la réaction chimique) est avantageuse afin de gélifier l'adhésif. Puis le vide est fait afin d'évacuer l'air emprisonné et terminer la réticulation afin d'obtenir une bonne adhésion.

Le procédé de fabrication du vitrage feuilleté lumineux tel que décrit précédemment peut comprendre :
- un assemblage de la première feuille de verre, de l'intercalaire de feuilletage comportant au moins la couche isolateur optique et de la deuxième feuille de verre, en particulier le procédé comporte avant assemblage le dépôt de la couche isolateur optique sur la deuxième et/ou première feuille de verre et de préférence une photoréticulation.

Le procédé de fabrication du vitrage feuilleté lumineux tel que décrit précédemment peut comprendre :
- un assemblage de la première feuille de verre, de l'intercalaire de feuilletage comportant au moins un film et de la deuxième feuille de verre et en particulier la couche isolateur optique qui est un film PSA ou un film dit post adhésif en matière polymère partiellement photoréticulée avant assemblage (et la poursuite de la photo réticulation, de préférence sous UVA, intervient après assemblage)
- un feuilletage comportant un dégazage, notamment étuvage, et une mise sous pression positive notamment autoclavage.

D'autres détails et caractéristiques avantageuses de l'invention apparaitront à la lecture des exemples selon l'invention illustrés par les figures suivantes.
La figure 1 représente une vue schématique en coupe d'un vitrage feuilleté lumineux de véhicule automobile selon l'invention dans un premier mode de réalisation par injection de lumière périphérique. La figure 1' représente une vue schématique de face du vitrage de la figure 1.
La figure 2 représente une vue schématique en coupe d'un vitrage feuilleté lumineux de véhicule automobile dans un deuxième mode de réalisation par injection de lumière périphérique

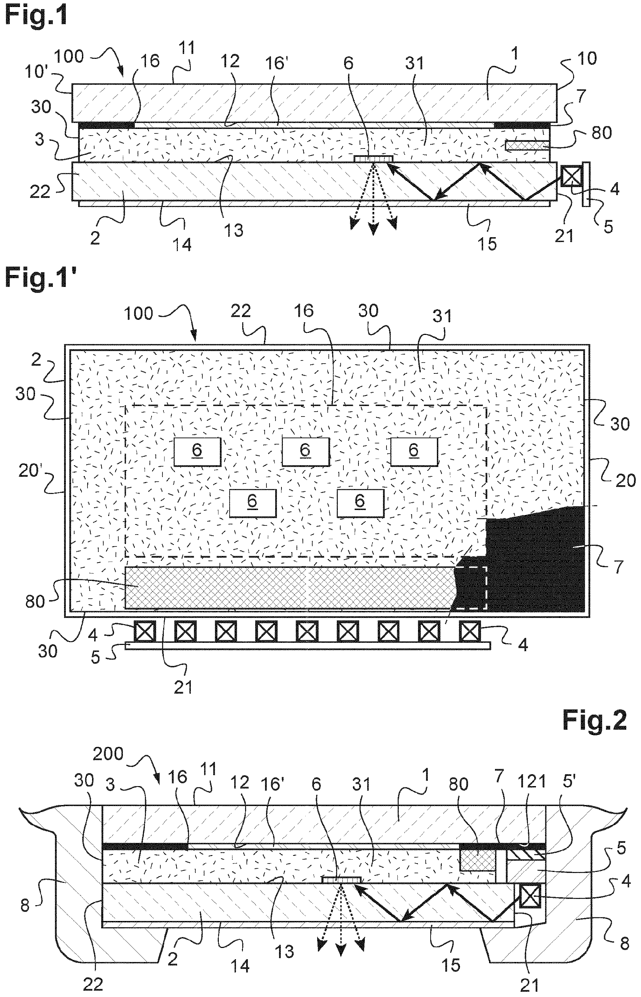

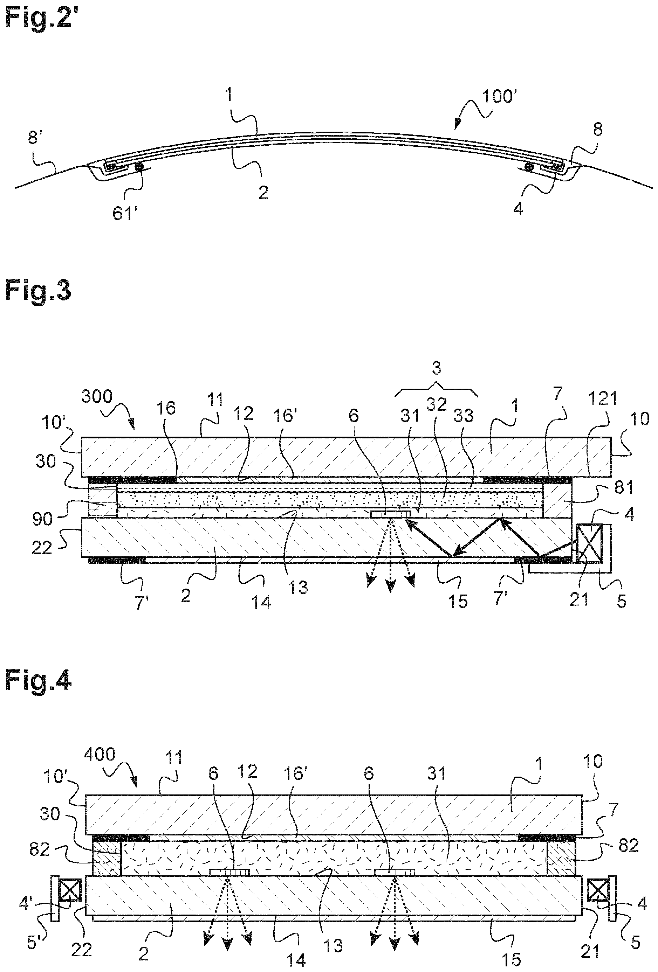

La figure 2' représente une vue schématique en coupe d'un vitrage feuilleté lumineux de véhicule automobile qui est un toit monté dans un véhicule.
La figure 3 représente une vue schématique en coupe d'un vitrage feuilleté lumineux de véhicule automobile dans un troisième mode de réalisation par injection de lumière périphérique.

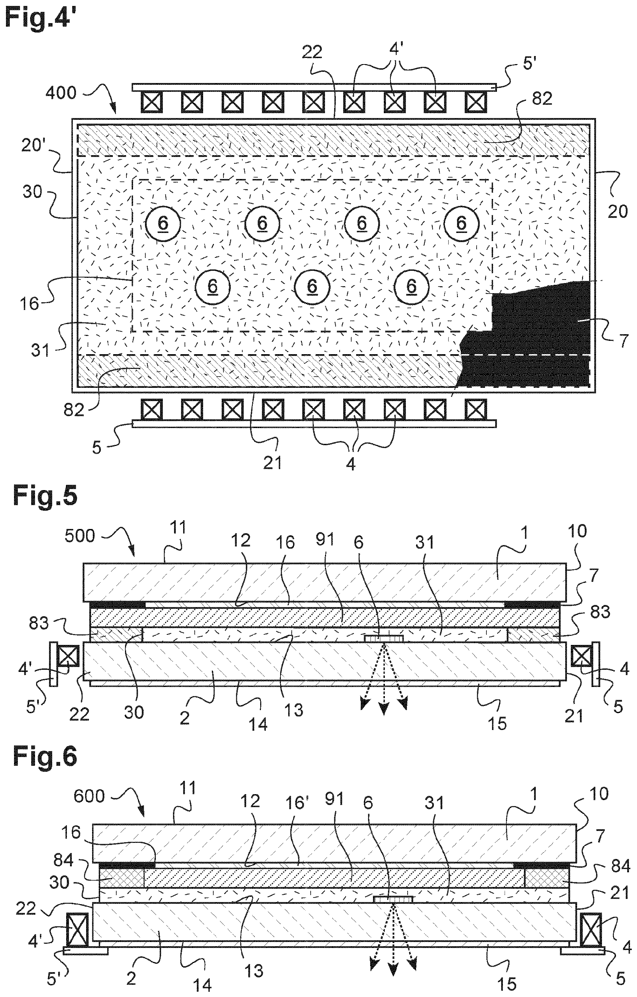

La figure 4 représente une vue schématique en coupe d'un vitrage feuilleté lumineux de véhicule automobile dans un quatrième mode de réalisation par injection de lumière périphérique. La figure 4' représente une vue schématique de face du vitrage de la figure 4.
La figure 5 représente une vue schématique en coupe d'un vitrage feuilleté lumineux de véhicule automobile dans un cinquième mode de réalisation par injection de lumière périphérique.
La figure 6 représente une vue schématique en coupe d'un vitrage feuilleté lumineux de véhicule automobile dans un sixième mode de réalisation par injection de lumière périphérique.

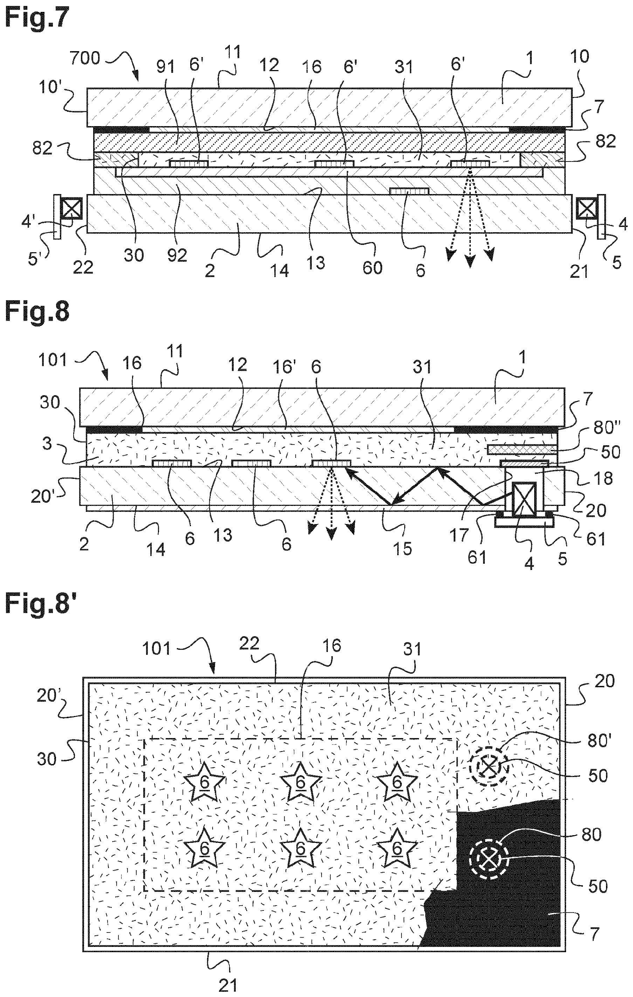

La figure 7 représente une vue schématique en coupe d'un vitrage feuilleté lumineux de véhicule automobile dans un septième mode de réalisation par injection de lumière périphérique.
La figure 8 représente une vue schématique en coupe d'un vitrage feuilleté lumineux de véhicule automobile dans un premier mode de réalisation par injection de lumière via une paroi interne de verre. La figure 8' représente une vue schématique de face du vitrage de la figure 8.

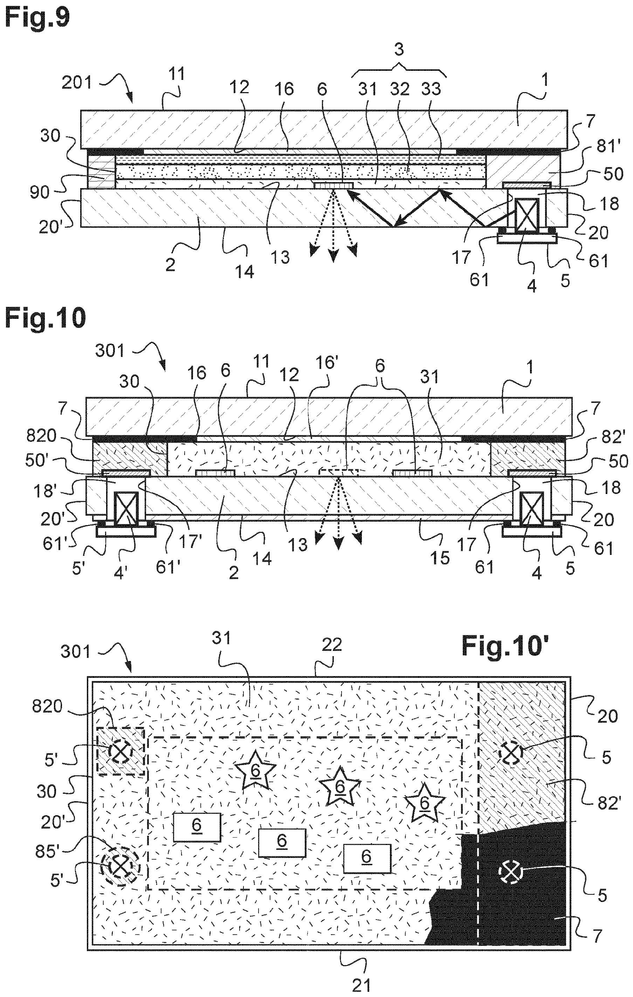

La figure 9 représente une vue schématique en coupe d'un vitrage feuilleté lumineux de véhicule automobile dans un deuxième mode de réalisation par injection de lumière via une paroi interne de verre.
La figure 10 représente une vue schématique en coupe d'un vitrage feuilleté lumineux de véhicule automobile dans un troisième mode de réalisation par injection de lumière via une paroi interne de verre. La figure 10' représente une vue schématique de face du vitrage de la figure 10.

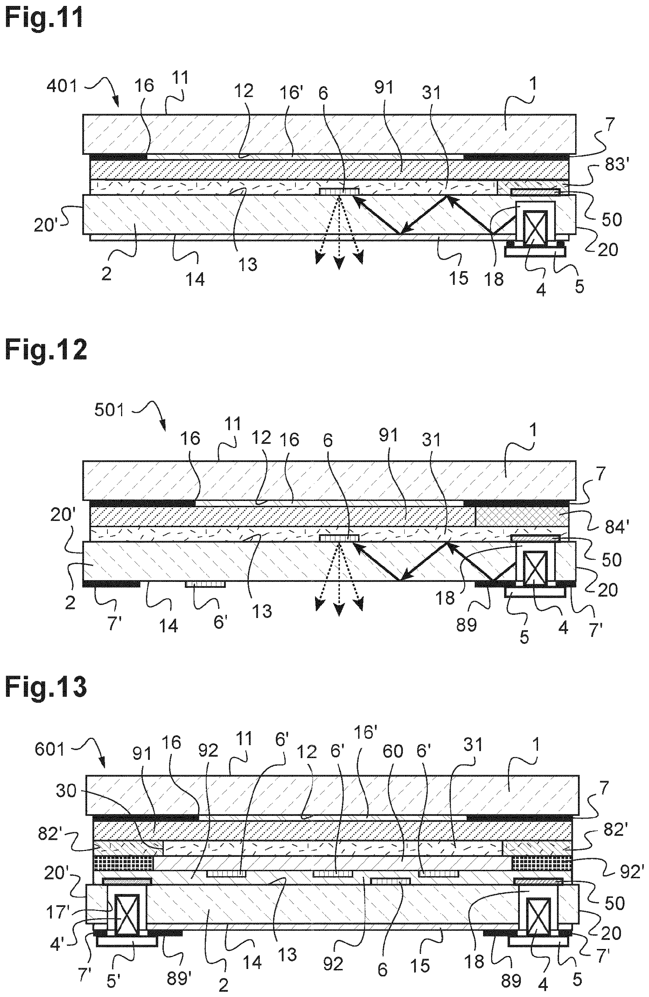

La figure 11 représente une vue schématique en coupe d'un vitrage feuilleté lumineux de véhicule automobile dans un quatrième mode de réalisation par injection de lumière via une paroi interne de verre.
La figure 12 représente une vue schématique en coupe d'un vitrage feuilleté lumineux de véhicule automobile dans un cinquième mode de réalisation par injection de lumière via une paroi interne de verre.
La figure 13 représente une vue schématique en coupe d'un vitrage feuilleté lumineux de véhicule automobile dans un sixième mode de réalisation par injection de lumière via une paroi interne de verre.

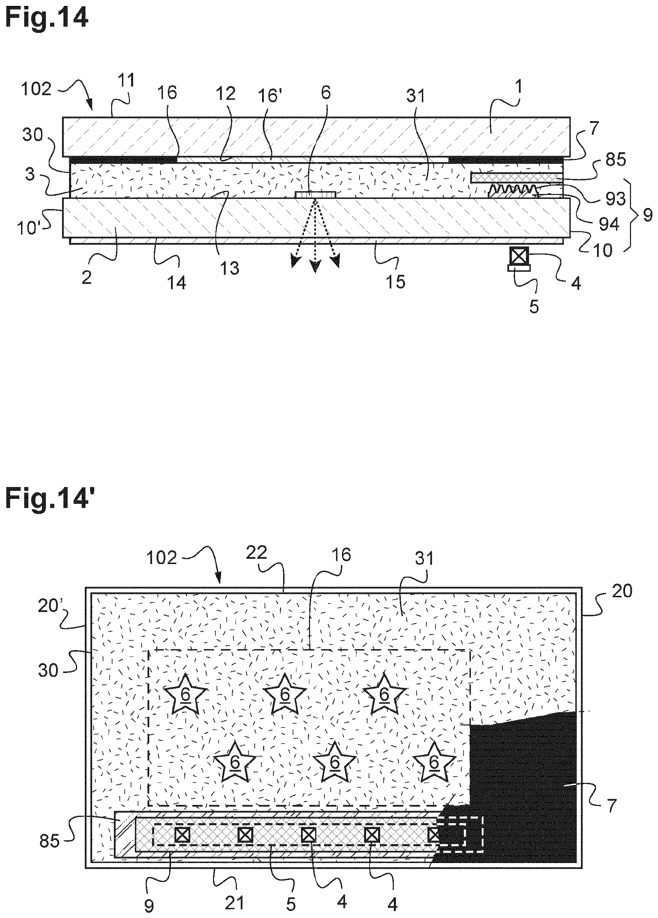

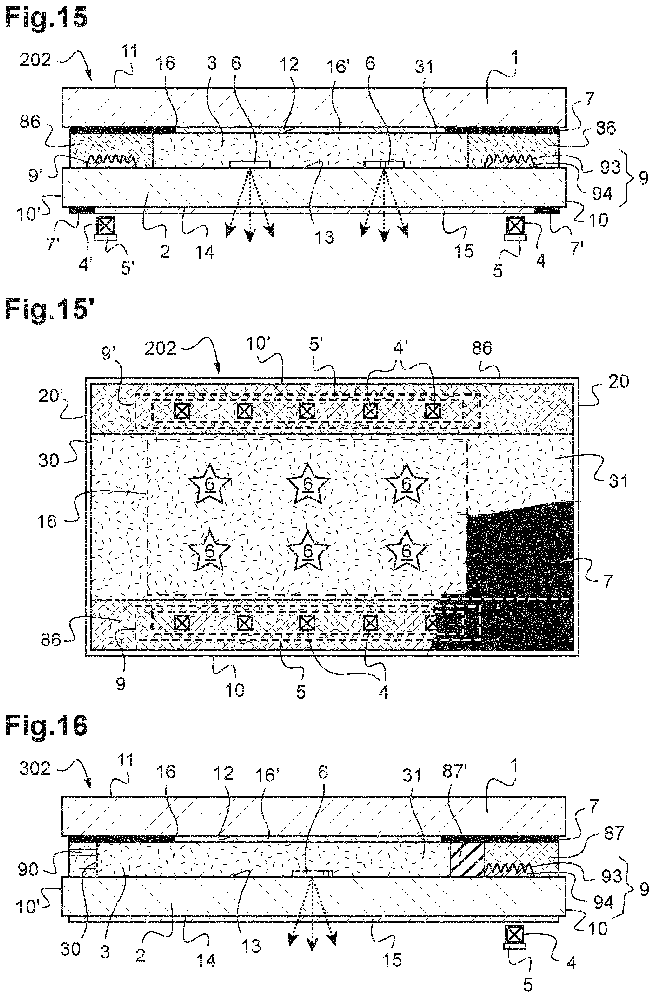

La figure 14 représente une vue schématique en coupe d'un vitrage feuilleté lumineux de véhicule automobile dans un premier mode de réalisation par injection de lumière traversant un verre. La figure 14' représente une vue schématique de face du vitrage de la figure 14. La figure 15 représente une vue schématique en coupe d'un vitrage feuilleté lumineux de véhicule automobile dans un deuxième mode de réalisation par injection de lumière traversant un verre.
La figure 15' représente une vue schématique de face du vitrage de la figure 15.
La figure 16 représente une vue schématique en coupe d'un vitrage feuilleté lumineux de véhicule automobile dans un troisième mode de réalisation par injection de lumière traversant un verre.

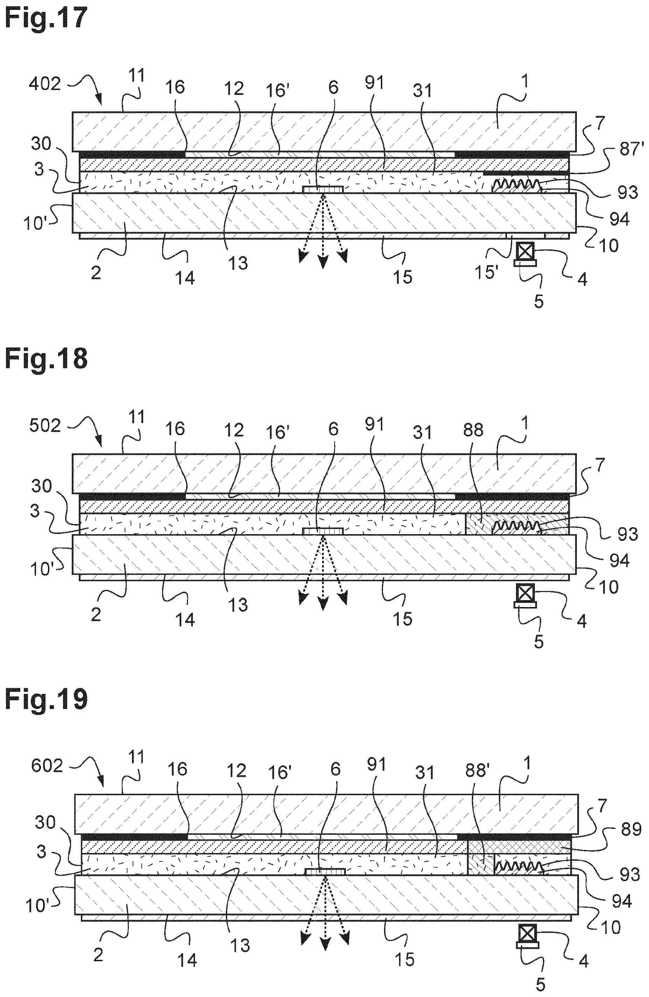

La figure 17 représente une vue schématique en coupe d'un vitrage feuilleté lumineux de véhicule automobile dans un quatrième mode de réalisation par injection de lumière traversant un verre.
La figure 18 représente une vue schématique en coupe d'un vitrage feuilleté lumineux de véhicule automobile dans un cinquième mode de réalisation par injection de lumière traversant un verre.
La figure 19 représente une vue schématique en coupe d'un vitrage feuilleté lumineux de véhicule automobile dans un sixième mode de réalisation par injection de lumière traversant un verre.

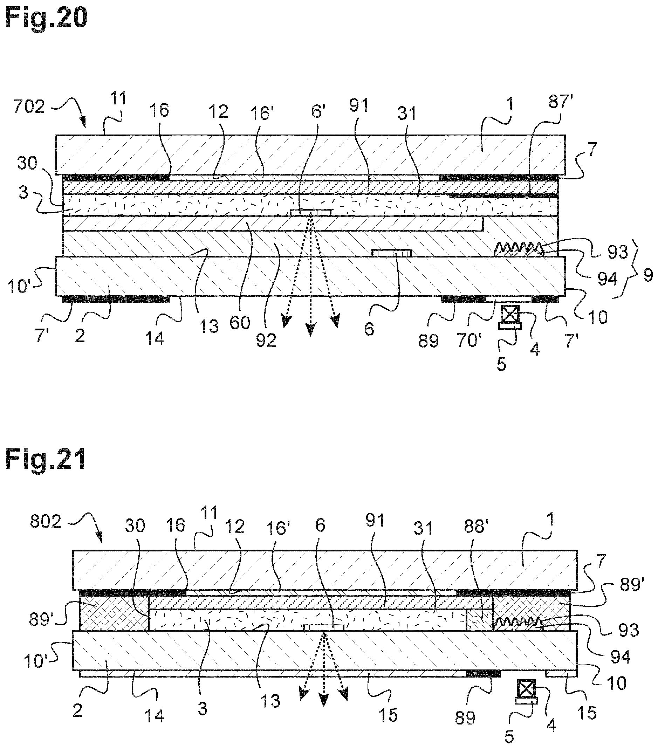

La figure 20 représente une vue schématique en coupe d'un vitrage feuilleté lumineux de véhicule automobile dans un septième mode de réalisation par injection de lumière traversant un verre.
La figure 21 représente une vue schématique en coupe d'un vitrage feuilleté lumineux de véhicule automobile dans un huitième mode de réalisation par injection de lumière traversant un verre.

On précise que par un souci de clarté les différents éléments des objets représentés ne sont pas nécessairement reproduits à l'échelle.
La figure 1 représente une vue schématique en coupe ici latérale d'un vitrage feuilleté lumineux de véhicule 100 selon l'invention dans un premier mode de réalisation par éclairage périphérique.
La figure 1' représente une vue schématique de face du vitrage de la figure 1.

Il s'agit ici d'un vitrage feuilleté 100 qui est ici un toit de voiture, rectangulaire (ou quadrilatère en variante) et bombé, qui comporte :
- une première feuille de verre 1, formant ici feuille externe, par exemple rectangulaire (de dimensions 300X300 mm par exemple), avec une composition claire ou teintée pour une fonction de contrôle solaire (verre VENUS VG10 ou TSA 4+ commercialisée par la société Saint-Gobain Glass) par exemple d'épaisseur égale à 2,1 mm, avec une première face principale 11 correspondant à la face F1 une deuxième face principale 12 coté intérieure dite F2 revêtue éventuellement d'un revêtement athermique (si verre clair), de contrôle solaire 16' ou encore chauffant etc, et un chant (tranches longitudinales 10 et 10'),
- un intercalaire de feuilletage 3, avec une tranche 30 ici longitudinale éventuellement décalée des tranches longitudinales 10, 10' vers le centre du verre (donc en retrait)
- une deuxième feuille de verre 2, de même dimensions que le verre 1, formant vitrage interne, côté habitacle, en verre minéral, présentant une troisième face principale 13 correspondant à la face F3 et une quatrième face principale 14 qui est la face F4, et un chant (tranches longitudinales 21 et 22 - par exemple une feuille de verre silicosodocalcique, extraclair comme verre Diamant commercialisée par la société Saint-Gobain Glass, d'épaisseur égale par exemple à 2,1 mm, verre d'indice de réfraction n0 de l'ordre de 1,52 à 550nm ou le verre Optiwhite de 1,95mm, éventuellement avec un empilement à l'ITO 15 en face 14 F4 (fonction basse émissivité).

La deuxième face 12 comporte une couche de masquage interne 7 formant un cadre de masquage par exemple un émail noir, délimitant un clair de vitre 16 (clair de jour) ici rectangulaire (cf figure 1').

Des diodes électroluminescentes 4 s'étendent le long du bord longitudinal de couplage 21 de la deuxième feuille de verre 2. Il s'agit ici de diodes à émission frontale. Ainsi ces diodes 4 sont alignées sur un support PCB 5, par exemple une barrette en parallélépipède. Le support PCB 5 est fixé par exemple par de la colle 7 (ou un adhésif double face) sur le bord de la face.

Alternativement la source de lumière peut être une ou des sources primaires (diodes etc) couplées directement à un guide, le long de la tranche de couplage, par exemple fibre optique extractrice avec zone de sortie de lumière.

Le vitrage lumineux 100 peut avoir une pluralité de zones d'extraction 6 de la lumière guidée dans la deuxième feuille, notamment de géométrie donnée (rectangulaire, carré, rond ...). Par exemple il s'agit d'une couche diffusante 6 sérigraphiée sur la troisième face et même alternativement ou cumulativement sur la quatrième face, couche de préférence dans le clair de vitre 16. Alternativement ce peut être un film extracteur local posé ou collé localement sur la troisième ou quatrième face (à reliefs ou avec couche diffusante ou diffusant en masse).

Par exemple la distance entre l'extraction 6 et les diodes est d'au moins 10 ou 40mm. Par exemple l'extraction occupe de 10 à 100% du clair de vitre, sous la couche isolateur optique.

On peut prévoir plusieurs séries de diodes 4 (un bord, deux bords, trois bords, sur toute la périphérie) pilotées indépendamment et même de couleur différente. On peut choisir des diodes émettant en lumière blanche ou colorée pour un éclairage d'ambiance, de lecture... On peut choisir une lumière rouge pour de la signalisation éventuellement en alternance avec de la lumière verte. Le support de diodes 5 peut être collé à la tranche 21.

Le rayon lumineux (après réfraction sur la tranche 21) se propage par réflexion totale interne (au niveau de la face F3 et de la face F4) dans la deuxième feuille 2 formant un guide de lumière. L'intercalaire de feuilletage est une couche isolateur optique qui est un polymère réticulé d'indice de réfraction n1 tel que n0-n1 est d'au moins 0,04 et même 0,1 et d'épaisseur de préférence d'au moins 300µm et même 600µm. L'intercalaire de feuilletage s'étend par exemple jusqu'aux bords des verres 1,2. Par exemple la couche isolateur optique et même le vitrage feuilleté présente un flou d'au plus 1%.

Si nécessaire la couche isolateur optique 3 peut être teintée tout en restant transparente dans le clair de vitre.

Pour masquer au maximum la lumière sortant vers la première face (F1) on place un élément opaque interne 80 dans l'intercalaire 3 par exemple une pièce noire 80 sous la couche de masquage interne 7. Cette pièce est une barrette rectangulaire le long du bord longitudinal de couplage 21 (cf figure 1') de longueur supérieure ou égale à la barrette de diodes. Cette pièce peut dépasser de la tranche du vitrage par exemple fait partie du support 5.

Dans une première réalisation, la couche isolateur optique est un film réticulé PSA.

Comme film bas indice PSA à base de silicone, on peut citer le produit dénommé Opt Alpha Gel de la société Taica (n1= 1,41) par exemple de 1mm. On a appliqué une pression par rouleau et puis mis en autoclave.

En première variante, ce peut être un dépôt d'adhésif photo réticulable sur l'une des faces F2 ou F3 (ou encore par remplissage dans une cavité entre F2 et F3) et une photo réticulation par UVA.

En deuxième variante, on utilise un film partiellement photoréticulé par exemple à base d'acrylate et on assemble avec les verres. On termine la photo réticulation par UVA. Alternativement au verre extraclair on peut utiliser un verre organique par exemple un PC et de préférence la première feuille de verre est alors trempé.

Le toit 100 peut former par exemple un toit panoramique lumineux fixe 100' de véhicule automobile comme une voiture, monté par l'extérieur sur la carrosserie 8' via un adhésif 61' comme montré en figure 2'. La figure 2' représente une vue schématique en coupe d'un vitrage feuilleté lumineux de véhicule automobile qui est un toit monté dans un véhicule.

Ce vitrage lumineux feuilleté 100 peut former alternativement un pare-brise (éventuellement en supprimant ou adaptant l'encapsulation) à signalisation interne. La couche diffusante forme par exemple un signal anti collisions notamment formant une bande le long du bord longitudinal inférieur. Par exemple, la lumière s'allume (rouge) lorsqu'un véhicule de devant est trop proche. Ce vitrage lumineux feuilleté 100 peut former alternativement une custode avant ou arrière ou un pare-brise (éventuellement en supprimant ou adaptant l'encapsulation) à signalisation lumineuse externe. La couche diffusante 6 forme par exemple un répétiteur de clignotant ou un LOGO.. Dans ce dernier cas, la deuxième feuille de verre 2 est le vitrage extérieur (quatrième face est la face F1, troisième face est la face F2) et la première feuille de verre est le vitrage intérieur (teinté ou incolore).

Par ailleurs, si nécessaire une couche dite de cadrage entoure le pourtour de la couche isolateur optique, de préférence couche adhésive thermoplastique ou polymère réticulé et en contact avec la couche isolateur optique et même éventuellement en contact adhésif avec la troisième face et même avec la deuxième face, notamment couche de cadrage décalée du clair de vitre.

La figure 2 représente une vue schématique en coupe d'un vitrage feuilleté lumineux de véhicule automobile 200 dans un deuxième mode de réalisation par injection de lumière périphérique
Ce deuxième mode de réalisation diffère du premier mode d'abord en ce que des diodes à émission latérale 4 sont logées dans l'évidement (encoche périphérique) de la tranche 21. Ainsi ces diodes 4 sont alignées sur un support PCB 5, par exemple une barrette en parallélépipède, de préférence le plus opaque possible (non transparent) et leurs faces émettrices sont parallèles au support PCB et en regard de la tranche 21 dans la partie de tranche évidée. Le support PCB est fixé par exemple par de la colle 5' (ou un adhésif double face) sur le bord 121 de la face F2 12, et ici est engagé dans une gorge entre les faces F2 et F3 rendu possible par le retrait suffisant de la tranche 30 de l'intercalaire 3. La bande périphérique de masquage 7 en émail opaque (noir) peut masquer le support PCB 5 et même de la lumière sortante dans cette zone. On réduit au maximum la distance des diodes et la tranche 10, par exemple de 1 à 2mm L'espace entre chaque puce et la tranche 10 couplée optiquement peut être protégé de toute pollution : eau, chimique etc, ceci à long terme comme pendant la fabrication du vitrage lumineux 100.

Le vitrage lumineux 200 a en outre une encapsulation polymérique 8 par exemple en polyuréthane noir, notamment en PU-RIM (réaction in mold en anglais ou moulage par injection avec réaction). Elle est biface en bordure du vitrage. Cette encapsulation, assure une étanchéité à long terme (eau, produit de nettoyage...). L'encapsulation apporte aussi une bonne finition esthétique et permet d'intégrer d'autres éléments ou fonctions (inserts de renforcement...). Comme décrit dans le document WO2011092419 ou le document WO2013017790, l'encapsulation polymérique peut avoir un évidement traversant fermé par un couvercle amovible pour placer ou remplacer les diodes.

En outre l'élément interne de masquage est un film opaque PSA en contact adhésif avec la deuxième face 12.

La figure 3 représente une vue schématique en coupe latérale d'un vitrage feuilleté lumineux de véhicule automobile 300 dans un troisième mode de réalisation par injection de lumière périphérique.

Ce mode de réalisation diffère du premier mode d'abord en ce que la couche isolateur optique 31 est un revêtement par exemple d'au moins 1, 10µm,100µm sur un support polymère 32, notamment non adhésif, thermoplastique, en particulier PET de préférence d'au moins 30µm ou 50µm, et l'autre face principale du support comportant une autre couche adhésive polymère réticulé 33 identique ou non à la couche isolateur optique (peut être d'indice de réfraction quelconque) en contact avec la deuxième face ou en variante avec une couche polymère notamment thermoplastique et adhésive supérieure de l'intercalaire de feuilletage comme un PVB, un EVA, un TPU.

Par ailleurs, une couche dite de cadrage 90 entoure le pourtour de la couche isolateur optique, de préférence couche adhésive thermoplastique ou polymère réticulé et en contact avec la couche isolateur optique en contact adhésif avec la troisième face et avec la deuxième face. La couche de cadrage est décalée du clair de vitre 16. Cette couche de cadrage 90 ou joint de scellement forme une protection de la couche isolateur optique. Cette couche de cadrage 90 présente une zone opaque 81 (noire) comme renfort de masquage de lumière sortant vers la face F1.

Par exemple une couche de masquage intérieure 7' périphérique est sur la quatrième face 14 notamment congruente ou de largeur inférieure à la largeur de la couche de masquage interne 7.

En outre, le support de diodes 5 et en L avec une partie en regard de la quatrième face. Par exemple le vitrage interne est plus petit que le vitrage externe donc les diodes sont sous la partie dépassante de la deuxième face 121. Les diodes sont à émission latérale.

La figure 4 représente une vue schématique en coupe latérale d'un vitrage feuilleté lumineux de véhicule automobile 400 dans un quatrième mode de réalisation par injection de lumière périphérique. La figure 4' représente une vue schématique de face du vitrage de la figure 4. Ce mode de réalisation diffère du premier mode d'abord en ce qu'on ajoute un deuxième module de diodes 4', 5' le long du bord opposé longitudinal 22.

Par ailleurs, la couche isolateur optique (teintée ou incolore) est localement opaque (noire) sous forme de deux bandes noires 82 le long des bords de couplage 21,22 décalées du clair de vitre 16 (sous la couche de masquage interne 16). Pour ce faire on peut ajouter un agent colorant moléculaire dans la matière polymère réticulé.

En variante la zone opaque forme un cadre opaque périphérique.

La figure 5 représente une vue schématique en coupe latérale d'un vitrage feuilleté lumineux de véhicule automobile 500 dans un cinquième mode de réalisation par injection de lumière périphérique.

Ce mode de réalisation diffère du quatrième mode d'abord en ce que l'intercalaire de feuilletage comporte entre la deuxième face 12 et la couche isolateur optique 31 une couche adhésive supérieure 91 par exemple thermoplastique comme un PVB (de préférence avec des plastifiants) d'épaisseur 0,4mm environ ou encore un film OCA (d'indice de réfraction quelconque notamment supérieur à n1), couche adhésive supérieure 91 teintée ou incolore.

La zone opaque 83 de la couche isolateur optique forme un cadre opaque périphérique.

La couche isolateur optique 31 peut être un film ou alternativement un revêtement sur un support polymère ou encore un revêtement sur la troisième face 13.

La figure 6 représente une vue schématique en coupe latérale d'un vitrage feuilleté lumineux de véhicule automobile 600 dans un sixième mode de réalisation par injection de lumière périphérique.

Ce mode de réalisation diffère du cinquième mode d'abord en ce qu'au lieu de la zone opaque de la couche isolateur optique un élément opaque interne 84 (de renfort de masquage) est une zone périphérique de la couche adhésive supérieure 91 (deux bandes disjointes ou cadre).

La première feuille de verre 1 peut rester teintée (VG10 etc) ou être incolore.

Cette zone 84 peut alternativement être une autre matière opaque (noire) que la couche adhésive supérieure 91. En variante ce peut être une couche opaque à base de PVB sur la couche adhésive supérieure 91 à base de PVB (n'importe quelle face principale de la couche 91).

Par exemple les diodes 4, 4' sur support PCB 5,5' sont à émission latérale.

La couche isolateur optique 31 peut être un film sur un support polymère ou encore un revêtement sur la troisième face 13.

La figure 7 représente une vue schématique en coupe latérale d'un vitrage feuilleté lumineux de véhicule automobile 700 dans un septième mode de réalisation par injection de lumière périphérique.

Ce mode de réalisation diffère du cinquième mode d'abord en ce que l'intercalaire de feuilletage comporte entre la troisième face 13 et la couche isolateur optique 31 une couche adhésive inférieure 91 par exemple thermoplastique comme un PVB (de préférence avec des plastifiants) d'épaisseur 0,4mm environ ou encore un OCA (d'indice de réfraction quelconque notamment supérieur à n1), couche adhésive inférieure 92 incolore. La couche adhésive inférieure 92 est par exemple de même matière et/ou épaisseur que la couche adhésive supérieure 91. La couche adhésive supérieure 91 peut être supprimée.

Si la deuxième feuille 2 est en verre organique par exemple PC on peut préférer pour la couche adhésive inférieure 92 un TPU et que la première feuille 1 soit en verre trempé (thermiquement), teinté ou incolore. La couche adhésive supérieure 91 peut être supprimée.Par ailleurs est inséré entre la couche isolateur optique 31 (film, etc) et la couche adhésive inférieure 92 un film optique extracteur 60 de lumière guidée dans la couche adhésive inférieure 92, notamment film polymère et d'épaisseur de 100 à 300µm comportant des zones difffusantes 6' sur n'importe quelle face principale. La couche adhésive inférieure 92 ici est aussi sur le pourtour du film optique extracteur 60 (par fluage lors du process ou procédé par exemple).

La figure 8 représente une vue schématique en coupe longitudinale d'un vitrage feuilleté lumineux de véhicule automobile 101 dans un premier mode de réalisation par injection de lumière via une paroi interne de verre. La figure 8' représente une vue schématique de face du vitrage de la figure 8.

Ce mode de réalisation diffère du premier mode 100 par l'injection de lumière et la localisation de la source de lumière 4.

Des diodes 4 sur un support 5 sont dans un trou traversant 18 (décalé du clair de vitre 16), de forme circulaire, de la deuxième feuille de verre délimité par une paroi interne 17 et fermé par un capot 50 comme une feuille métallique ou tout autre obturateur optique coté troisième face 13. Le support de diodes 5 forme un couvercle collé par une colle 61 à la quatrième face 14. Un élément opaque 80 de masquage du trou, capot et diodes, qui est un disque noir, est dans l'intercalaire de feuilletage sous la couche de masquage interne 7.

Et on a dédoublé les moyens en rajoutant d'autres diodes 4 sont dans un autre trou traversant (décalé du clair de vitre 16), de forme circulaire fermé par un autre capot 50' et masqué par un autre élément opaque 80' de masquage du trou, capot et diodes, qui est un disque noir.

Les trous sont ici coté bord avant latéral du toit 20.

La couche de masquage 7 est souvent plus large à l'avant qu'à l arrière 20'.

La figure 9 représente une vue schématique en coupe longitudinale d'un vitrage feuilleté lumineux de véhicule automobile 201 dans un deuxième mode de réalisation par injection de lumière via une paroi interne de verre.

Ce mode de réalisation 201 diffère du premier mode précédent 101 d'abord en ce que la couche isolateur optique 31 est un revêtement par exemple d'au moins 1, 10µm,100µm sur un support polymère 32, notamment thermoplastique (par exemple PET) de préférence d'au moins 30µm ou 50µm, et l'autre face principale du support comportant une autre couche adhésive polymère réticulé 33 identique ou non à la couche isolateur optique (peut être d'indice de réfraction quelconque) en contact avec la deuxième face 12 ou en variante avec une couche polymère notamment thermoplastique et adhésive supérieure de l'intercalaire de feuilletage comme un PVB, un EVA, un TPU.

Par ailleurs une couche dite de cadrage 90 entoure le pourtour de la couche isolateur optique 31 et les couches 32, 33, couche dite de cadrage 90 de préférence couche adhésive thermoplastique ou polymère réticulé et en contact avec la couche isolateur optique en contact adhésif avec la troisième face et avec la deuxième face. La couche de cadrage est décalée du clair de vitre 16. Cette couche de cadrage 90 ou joint de scellement forme une protection de la couche isolateur optique. Cette couche de cadrage 90 présente une zone opaque 81' (noire) comme renfort de masquage de lumière sortant vers la première face (F1) et également anti halo de lumière sortant vers la quatrième face (F4) de part la zone opaque dépassant de la paroi 17 dans la bordure d'injection de 5cm.

La figure 10 représente une vue schématique en coupe longitudinale d'un vitrage feuilleté lumineux de véhicule automobile 301 dans un troisième mode de réalisation par injection de lumière via une paroi interne de verre. La figure 10' représente une vue schématique de face du vitrage de la figure 10.

Ce troisième mode de réalisation diffère du mode précédent 201 d'abord en ce qu'on ajoute deux autres modules de diodes 4',5' dans deux trous arrières 17' à proximité du bord latéral arrière 20' du vitrage notamment toit.

Un premier élément opaque 82' sous forme de bande noire latérale périphérique sert à la fois de masquage des deux trous avant et d'anti halo, bande dépassant de 5cm des parois 17 des deux trous avant à proximité du bord latéral avant 20.

On peut avoir diverses formes d'élément opaque interne et anti halo.

Par exemple un deuxième élément opaque 820 sous forme de rectangle noir périphérique sert à la fois de masquage d'un trou arrière et d'anti halo, rectangle dépassant de 5cm de la paroi du premier trou arrière donc présent dans la bordure d'injection

Un troisième élément opaque 85' sous forme de disque noir périphérique sert à la fois de masquage du deuxième trou arrière et d'anti halo, disque noir dépassant de 5cm de la paroi du deuxième trou arrière donc présent dans la bordure d'injection.

Chacun des premier, deuxième et troisième éléments opaques est une zone opaque de la couche isolateur optique. Alternativement cette zone opaque formant masquage interne et/ou anti-halo de la couche isolateur optique est deux bandes périphériques opaques disjointes ou même un cadre opaque qui peut aller jusqu'au chant de la deuxième feuille et même couvrir tout ou partie de ce chant.

Les motifs d'extraction 6 sont par exemple de plusieurs formes, formant signalétique ou non par exemple pictogramme pour une signalisation interne dans le cas d'une pare-brise ou d'un vitrage latéral (ou du toit).

La figure 11 représente une vue schématique en coupe longitudinale d'un vitrage feuilleté lumineux de véhicule automobile 401 dans un quatrième mode de réalisation par injection de lumière via une paroi interne de verre.

Ce quatrième mode de réalisation diffère du troisième mode 301 d'abord en ce qu'on ne rajoute pas forcément d'autres modules de diodes. L'intercalaire de feuilletage comporte entre la deuxième face 12 et la couche isolateur optique 31 une couche adhésive supérieure 91 par exemple thermoplastique comme un PVB (de préférence avec des plastifiants) d'épaisseur 0,4mm environ ou encore un OCA (d'indice de réfraction quelconque notamment supérieur à n1), couche adhésive supérieure 91 teintée ou incolore.

La zone opaque 83' interne et anti halo (bande ou disque ou rectangle etc) de la couche isolateur optique est en contact adhésif avec cette couche supérieure et avec le capot et la troisième face 13.

En variante on choisir une autre matière pour cette zone opaque.

La figure 12 représente une vue schématique en coupe longitudinale d'un vitrage feuilleté lumineux de véhicule automobile 501 dans un cinquième mode de réalisation par injection de lumière via une paroi interne de verre.

Ce mode de réalisation diffère du quatrième mode 401 d'abord en ce que la couche adhésive supérieure 91 comporte une zone périphérique opaque de masquage du trou 84'.

La quatrième face 14 comporte une couche de masquage intérieure 7' par exemple un émail noir qui est anti halo 89 en bordure d'injection sur 5cm. La couche à base d'ITO est éventuellement supprimée.

On a ajouté un autre élément d'extraction de lumière 6' sur la face 14.

La figure 13 représente une vue schématique en coupe latérale d'un vitrage feuilleté lumineux de véhicule automobile 601 dans un sixième mode de réalisation par injection de lumière via une paroi interne de verre.

Ce mode de réalisation diffère du troisième mode 301 d'abord en ce que la quatrième face 14 comporte une couche de masquage intérieure 7' par exemple un émail noir qui est anti halo 89, 89' en bordure d'injection sur 5cm.

La couche isolateur optique 31 est localement teinté 84' pour former élément de masquage des trous avant et arrière.

Pour ajouter des zones d'extraction on a inséré un film extracteur de lumière 60 entre la couche isolateur optique 31 et la troisième face 13.

Le film optique extracteur 60 de lumière guidée dans la couche adhésive inférieure 92, notamment film polymère et d'épaisseur de 50 ou 100 à 300µm comportant des zones difffusantes 6' sur n'importe quelle face principale. Une couche adhésive de cadre 92' ici est aussi sur le pourtour du film optique extracteur 60 par exemple à base de PVB comme la couche adhésive inférieure.

La figure 14 représente une vue schématique en coupe d'un vitrage feuilleté lumineux de véhicule automobile 102 dans un premier mode de réalisation par injection de lumière traversant la deuxième feuille de verre 2, ici feuille intérieure.

Ce mode de réalisation diffère du premier mode 100 par l'injection de lumière et la localisation de la source de lumière 4.

Des diodes 4 (ici à émission frontale) sur un support 5 sont en regard (ou décalés) de la quatrième face principale 14 F4 et le couplage optique avec la deuxième feuille 2 se fait via un élément de redirection de lumière pour le guidage, local comme un film optique redirecteur 9, coté troisième face principale (ou quatrième face principale) faisant face à la couche de masquage interne 7.

Par exemple c'est un film prismatique polymère avec des prismes 93 et une partie plane 94 collé ou fixée par succion à la troisième face et d'épaisseur entre 100 et 300µm couvert par la couche isolateur optique 31. Le film forme une bande longitudinale comme la source de lumière de type linéaire 4 le long d'un bord longitudinal du toit par exemple.

Placé coté face F3 on préfère un film prismatique réflecteur donc avec une couche réfléchissante en dépôt conforme sur les prismes. Placé alternativement coté face F4 c'est un film prismatique transparent.

Si nécessaire, n élément de masquage opaque 85 est au sein de l'intercalaire 3 sous la couche de masquage interne 7. Il forme une bande longitudinale 85 en regard du film prismatique polymère.

La figure 15 représente une vue schématique en coupe d'un vitrage feuilleté lumineux de véhicule automobile 202 dans un deuxième mode de réalisation par injection de lumière traversant le verre 2. La figure 15' représente une vue schématique de face du vitrage de la figure 15.

Ce mode de réalisation diffère du premier mode 102 en ce qu'on a ajouté une autre source de lumière 4' sur son support PCB 5', un autre film redirecteur (prismatique réflecteur) 9' le long de l'autre bord longitudinal 10'. Est rajoutée une couche de masquage 7' sur la face F4 si nécessaire.

Ce mode de réalisation diffère aussi du premier mode 102 en ce qu'une zone locale et périphérique 86 de la couche isolateur optique 31 le long de chaque bord longitudinal est opaque (noire) sert à la fois de masquage de chaque source de lumière 4,4' et anti halo dépassant du bord interne du film redirecteur (prismatique réflecteur) 9, 9' de 5cm.

Dans les réalisation suivantes, les moyens optiques ne sont pas forcément dédoublés.

La figure 16 représente une vue schématique en coupe d'un vitrage feuilleté lumineux de véhicule automobile 302 dans un troisième mode de réalisation par injection de lumière traversant un verre.

Ce mode de réalisation 302 diffère du dernier mode 202 en ce que la couche isolateur optique 31 est encadrée par une couche périphérique de scellement 90 notamment avec une zone opaque de masquage 87 et éventuellement une partie 87' de la couche isolateur optique est opaque (noire) et forme un élément anti halo dépassant du bord interne du film redirecteur 9 de 5cm.

La figure 17 représente une vue schématique en coupe d'un vitrage feuilleté lumineux de véhicule automobile 402 dans un quatrième mode de réalisation par injection de lumière traversant un verre.

Ce mode de réalisation diffère du premier mode 202 d'abord en ce que la couche à base d'ITO a si nécessaire une épargne 15' au droit de la source de lumière 4. On a ajouté une couche adhésive supérieure 91 par exemple à base de PVB porteur d'un revêtement à base de PVB et opaque 87' servant pour le masquage.

La figure 18 représente une vue schématique en coupe d'un vitrage feuilleté lumineux de véhicule automobile 502 dans un cinquième mode de réalisation par injection de lumière traversant un verre.

Ce mode de réalisation diffère du mode précédent 402 d'abord en ce que la couche à base d'ITO 15 n'a pas une épargne au droit de la source de lumière 4. La couche isolateur optique 31 a localement une zone opaque 87' servant pour le masquage et antihalo dépassant du bord interne du film redirecteur 9 de 5cm.

La figure 19 représente une vue schématique en coupe d'un vitrage feuilleté lumineux de véhicule automobile 602 dans un sixième mode de réalisation par injection de lumière traversant un verre.

Ce mode de réalisation diffère du mode précédent 502 d'abord en ce que la couche isolateur optique a localement une zone opaque 88' servant seulement antihalo dépassant du bord interne du film redirecteur 9 de 5cm. La couche adhésive supérieure 91 a localement une zone opaque 89 servant pour le masquage.

La figure 20 représente une vue schématique en coupe d'un vitrage feuilleté lumineux de véhicule automobile 702 dans un septième mode de réalisation par injection de lumière traversant un verre.

Ce mode de réalisation diffère du quatrième mode précédent 402 par deux ajouts sous la couche isolateur optique 31
- un film extracteur 60 (comme déjà décrit) avec une couche diffusante 6'
- une couche adhésive intérieure 92 par exemple PVB (ou TPU si feuille 2 en PC).

La quatrième face 14 présente une couche noire anti halo 89 dépassant du bord interne du film redirecteur 9 de 5cm, c'est une zone d'une couche de masquage intérieure 7' avec une épargne 70' au droit des diodes 4.

On peut rajouter un élément anti halo interne sur la troisième face dépassant du bord interne du film redirecteur 9 de 5cm.

La figure 21 représente une vue schématique en coupe d'un vitrage feuilleté lumineux de véhicule automobile 802 dans un huitième mode de réalisation par injection de lumière traversant un verre.

Ce mode de réalisation 802 diffère du cinquième mode 502 d'abord en ce que la couche à base d'ITO a une épargne au droit de la source de lumière 4 et la quatrième face 14 présente une couche noire anti halo 89 dépassant du bord interne du film redirecteur 9 de 5cm. La couche de masquage interne opaque 89' est un cadre de scellement entourant la couche adhésive supérieure 91 et la couche isolateur optique 31 (avec sa zone locale noire 88' éventuelle formant anti halo) et voire également la couche adhésive supérieure 91.

## Revendications

1. Vitrage lumineux de véhicule notamment routier (100 à 802) comprenant :
- un vitrage feuilleté, de préférence bombé, comportant :
- une première feuille (1), en verre minéral ou organique, avec une première face principale (11) et une deuxième face principale (12)
- une deuxième feuille (2), en verre minéral ou organique, avec une troisième face principale nue ou revêtue (13) et une quatrième face principale (14), deuxième feuille d'indice de réfraction n0 d'au moins 1,5 dans le visible
- un intercalaire de feuilletage polymère (3) en contact adhésif avec la deuxième face nue ou revêtue et avec la troisième face nue ou revêtue
- entre la deuxième face et la troisième face, une couche isolateur optique (3, 31), isolant optiquement la deuxième feuille de la première feuille, avec un indice de réfraction n1 dans le visible, et avec n0-n1 qui est d'au moins 0,04 dans le visible, couche isolateur optique d'épaisseur au moins 500nm,
- de préférence une source de lumière (4) en couplage optique avec la deuxième feuille formant guide de lumière,
- de préférence des moyens d'extraction de lumière guidée (6) dans la deuxième feuille, **caractérisé en ce que** la couche isolateur optique est une couche adhésive en matière polymère réticulé, formant tout ou partie de l'intercalaire de feuilletage.

2. Vitrage lumineux de véhicule selon la revendication précédente **caractérisé en ce que** la matière polymère réticulé de la couche isolateur optique et/ou d'une couche adhésive supérieure ou inférieure de l'intercalaire de feuilletage en matière polymère réticulé, en est choisie parmi les polymères à base de polyacrylate, notamment d'uréthane acrylate ou de fluoro uréthane acrylate ou de fluoro-silicone acrylate, de polysiloxanes, de silicone, notamment de polydiméthylsiloxane, de polymère époxy ou de polyépoxydes, de polyuréthane, d'acétate de polyvinyle, de polyester et en particulier la matière polymère réticulé de la couche isolateur optique est de préférence est choisie parmi un polymère à base d'acrylate, notamment d'uréthane acrylate ou de silicone acrylate ou à base de silicone, et le polymère ayant en outre une fonction fluorée.

3. Vitrage lumineux de véhicule selon l'une des revendications précédentes **caractérisé en ce qu'**au moins un film optique (60) est entre la couche isolateur optique et la troisième face, et même en contact avec la couche isolateur optique, et **en ce que** le film optique, notamment polymère, est choisi parmi :
- film dit extracteur, formant moyen d'extraction de lumière guidée dans la deuxième feuille ou dans une couche sous jacente à la couche isolateur optique
- et/ou film redirecteur, local, formant moyens de redirection de lumière dans la deuxième feuille de verre issue d'une source de lumière (4) coté quatrième face voire décalée du vitrage.

4. Vitrage lumineux de véhicule selon l'une des revendications précédentes **caractérisé en ce que** la couche isolateur optique qui est de préférence en contact adhésif avec la troisième face, est un revêtement sur un support polymère (32) notamment thermoplastique et de préférence d'épaisseur d'au moins 30µm, et l'autre face principale du support éventuellement comportant une autre couche adhésive polymère réticulé (33) en contact avec la deuxième face ou avec une couche polymère notamment thermoplastique et adhésive supérieure de l'intercalaire de feuilletage.

5. Vitrage lumineux de véhicule selon l'une des revendications précédentes **caractérisé en ce que** la couche isolateur optique qui est de préférence en contact adhésif avec la troisième face et/ou une couche adhésive supérieure ou inférieure en polymère réticulé de l'intercalaire de feuilletage, est un film à base de polymère réticulé, notamment d'au moins 30µm, choisi parmi :
- film sensible à la pression, qui est de préférence en contact adhésif avec la troisième face, et de préférence choisi parmi les polymères à base d'acrylate, d'uréthane acrylate ou en fluoro uréthane acrylate ou de silicone
- un film dit post adhésif de polymère partiellement photoréticulé avant assemblage et photoréticulé après assemblage, et de préférence à base d'acrylate.

6. Vitrage lumineux de véhicule selon l'une des revendications précédentes **caractérisé en ce qu'**une couche dite de cadrage entoure le pourtour de la couche isolateur optique, de préférence couche adhésive thermoplastique ou polymère réticulé et en contact avec la couche isolateur optique et même éventuellement en contact adhésif avec la troisième face et même avec la deuxième face, notamment couche de cadrage décalée d'un clair de vitre.

7. Vitrage lumineux de véhicule selon l'une des revendications précédentes **caractérisé en ce qu'**il comprend un élément opaque (80 à 85) périphérique entre la deuxième et troisième face et même entre une couche de masquage interne et la troisième face, notamment de masquage interne d'une zone d'injection de lumière via un trou dans la deuxième feuille formant guide de lumière, de préférence vitrage intérieur, ou d'une source de lumière coté quatrième face, la deuxième feuille étant de préférence vitrage intérieur et formant guide de lumière.

8. Vitrage lumineux de véhicule selon la revendication précédente **caractérisé en ce que** l'élément opaque interne est une couche notamment zone localement opaque de la couche isolateur optique ou d'une couche adhésive polymère réticulé telle qu'une couche adhésive inférieure sous la couche isolateur optique ou supérieure sur la couche isolateur optique ou une couche de cadrage sur le pourtour de la couche isolateur optique ou encore d'un film notamment polymère inséré au sein de l'intercalaire de feuilletage.

9. Vitrage lumineux de véhicule selon l'une des revendications précédentes **caractérisé en ce qu'**il comprend une source de lumière périphérique, notamment sous une couche de masquage interne, en couplage optique avec la deuxième feuille formant guide de lumière, de préférence vitrage intérieur et **en ce qu'**il comprend un élément opaque anti-halo en bordure d'une zone d'injection de la lumière dans le guide, en contact avec la troisième face, de préférence de largeur d'au plus 10cm et/ou **en ce qu'**il comprend un autre élément opaque anti-halo sur la quatrième face faisant face à une bordure d'une zone d'injection de la lumière dans le guide de préférence de largeur d'au plus 10cm.

10. Vitrage lumineux de véhicule selon la revendication précédente **caractérisé en ce que** l'élément opaque interne anti halo est d'indice de réfraction n'1 dans le visible tel que n0-n'1 est d'au moins 0,04 dans le visible et même d'au moins 0,1 et **en ce que** l'écart en valeur absolue n'1-n1 est d'au plus 0,04 dans le visible et même d'au plus 0,01.

11. Vitrage lumineux de véhicule selon l'une des revendications précédentes **caractérisé en ce qu'**une injection de lumière issue d'une source de lumière en couplage optique avec la deuxième feuille formant guide de lumière, de préférence un ensemble de diodes électroluminescentes, est :
1) par une tranche de la deuxième feuille de verre
2) ou par une paroi d'un trou de la deuxième feuille de verre, notamment trou décalé d'un clair de vitre, faisant face à une couche de masquage interne
3) ou par un élément de redirection de lumière, local comme un film optique redirecteur, coté troisième face principale ou quatrième face principale, la source de lumière étant alors en regard ou décalée de la quatrième face principale notamment couplage optique direct ou par l'intermédiaire d'une optique, notamment source de lumière et élément de redirection de lumière décalés d'un clair de vitre, faisant face à une couche de masquage interne.

12. Vitrage lumineux de véhicule notamment routier selon l'une des revendications précédentes **caractérisé en ce que** la première feuille est la feuille externe, le vitrage est choisi parmi un toit, un pare-brise, une vitre latérale, ou **en ce que** la première feuille est la feuille interne, le vitrage est choisi parmi un pare-brise, une vitre latérale une lunette arrière, un vitrage de porte arrière, en particulier la feuille externe est en verre minéral.

13. Véhicule notamment routier incorporant au moins un vitrage lumineux selon l'une des revendications précédentes.

14. Procédé de fabrication du vitrage lumineux de véhicule notamment routier selon l'une des revendications 1 à 12 comportant :
- un assemblage de la première feuille de verre, de l'intercalaire de feuilletage comportant au moins la couche isolateur optique et de la deuxième feuille de verre, la couche isolateur optique est un film PSA ou un film dit post adhésif en matière polymère partiellement photoréticulée avant assemblage ou un revêtement sur support polymère,
- un feuilletage comportant un dégazage et une mise sous pression positive.

15. Procédé de fabrication du vitrage lumineux de véhicule notamment routier selon l'une des revendications 1 à 12 comportant un assemblage de la première feuille de verre, de l'intercalaire de feuilletage comportant au moins la couche isolateur optique et de la deuxième feuille de verre, le procédé comporte avant assemblage le dépôt de la couche isolateur optique sur la deuxième et/ou première feuille de verre et de préférence une photoréticulation.

## Patentansprüche

1. Beleuchtete Fahrzeugverglasung, insbesondere Straßenfahrzeugverglasung (100 bis 802), umfassend:
- eine vorzugsweise gebogene Verbundverglasung, umfassend:
- eine erste Scheibe (1) aus Mineralglas oder organischem Glas mit einer ersten Hauptfläche (11) und einer zweiten Hauptfläche (12)
- eine zweite Scheibe (2) aus Mineralglas oder organischem Glas mit einer dritten unbeschichteten oder beschichteten Hauptfläche (13) und einer vierten Hauptfläche (14), wobei die zweite Scheibe einen Brechungsindex n0 von mindestens 1,5 im sichtbaren Bereich aufweist
- eine Polymer-Verbundzwischenlage (3), die in Haftkontakt mit der zweiten unbeschichteten oder beschichteten Fläche und mit der dritten unbeschichteten oder beschichteten Fläche steht
- zwischen der zweiten Fläche und der dritten Fläche eine optische Isolierschicht (3, 31), die die zweite Scheibe optisch von der ersten Scheibe isoliert, mit einem Brechungsindex n1 im sichtbaren Bereich und mit n0-n1, der im sichtbaren Bereich mindestens 0,04 beträgt, wobei die optische Isolierschicht eine Dicke von mindestens 500 nm aufweist,
- vorzugsweise eine Lichtquelle (4) in optischer Kopplung mit der zweiten lichtleitenden Scheibe,
- vorzugsweise Mittel zum Extrahieren von geleitetem Licht (6) in der zweiten Scheibe, **dadurch gekennzeichnet, dass** die optische Isolierschicht eine Haftschicht aus vernetztem Polymermaterial ist, die die gesamte oder einen Teil der Verbundzwischenlage bildet.

2. Beleuchtete Fahrzeugverglasung nach dem vorstehenden Anspruch, **dadurch gekennzeichnet, dass** das vernetzte Polymermaterial der optischen Isolierschicht und/oder einer oberen oder unteren Haftschicht der Verbundzwischenlage aus vernetztem Polymermaterial ausgewählt ist aus Polymeren auf Polyacrylatbasis, insbesondere Urethanacrylat oder Fluorurethanacrylat oder Fluorsilikonacrylat, Polysiloxane, Silikon, insbesondere Polydimethylsiloxan, Epoxypolymer oder Polyepoxide, Polyurethan, Polyvinylacetat, Polyester und insbesondere das vernetzte Polymermaterial der optischen Isolierschicht vorzugsweise ausgewählt ist aus einem Polymer auf Acrylatbasis, insbesondere Urethanacrylat oder Acrylsilikon, oder auf Silikonbasis, und das Polymer ferner eine fluorierte Funktion aufweist.

3. Beleuchtete Fahrzeugverglasung nach einem der vorstehenden Ansprüche, **dadurch gekennzeichnet, dass** sich mindestens eine optische Folie (60) zwischen der optischen Isolierschicht und der dritten Fläche befindet und sogar mit der optischen Isolierschicht in Kontakt steht, und **dadurch, dass** die optische Folie, insbesondere aus Polymer, ausgewählt ist aus:
- einer sogenannten Extraktionsfolie, die ein Mittel zum Extrahieren von geleitetem Licht in der zweiten Schicht oder in einer Schicht unterhalb der optischen Isolierschicht bildet
- und/oder einer lokalen Umlenkfolie, die Mittel zur Umlenkung des Lichts in der zweiten Glasscheibe bildet, das von einer Lichtquelle (4) auf der vierten Fläche oder sogar versetzt zur Verglasung stammt.

4. Beleuchtete Fahrzeugverglasung nach einem der vorstehenden Ansprüche, **dadurch gekennzeichnet, dass** die optische Isolierschicht, die vorzugsweise in Haftkontakt mit der dritten Fläche steht, eine Beschichtung auf einem Polymerträger (32), insbesondere einem thermoplastischen Polymerträger, mit einer Dicke von vorzugsweise mindestens 30 µm ist, und die andere Hauptfläche des Trägers gegebenenfalls eine weitere Haftschicht aus vernetztem Polymer (33) aufweist, die mit der zweiten Fläche oder mit einer insbesondere thermoplastischen und haftenden oberen Polymerschicht der Verbundzwischenlage in Kontakt steht.

5. Beleuchtete Fahrzeugverglasung nach einem der vorstehenden Ansprüche, **dadurch gekennzeichnet, dass** die optische Isolierschicht, die vorzugsweise in Haftkontakt mit der dritten Fläche und/oder einer oberen oder unteren Haftschicht aus vernetztem Polymer der Verbundzwischenlage steht, eine Folie auf Basis eines vernetzten Polymers ist, insbesondere von mindestens 30 µm, ausgewählt aus:
- einer druckempfindlichen Folie, die vorzugsweise in Haftkontakt mit der dritten Fläche steht und vorzugsweise ausgewählt ist aus Polymeren auf Acrylat-, Urethanacrylat- oder Fluorurethanacrylat- oder Silikonbasis
- einer sogenannten Post-Haftfolie aus einem Polymer, das vor dem Zusammenfügen teilweise photovernetzt und nach dem Zusammenfügen photovernetzt wurde, vorzugsweise auf Acrylatbasis.

6. Beleuchtete Fahrzeugverglasung nach einem der vorstehenden Ansprüche, **dadurch gekennzeichnet, dass** eine sogenannte Rahmenschicht den Umfang der optischen Isolierschicht umgibt, vorzugsweise eine thermoplastische Haftschicht oder aus vernetztem Polymer, die mit der optischen Isolierschicht in Kontakt steht und gegebenenfalls sogar mit der dritten Fläche und sogar mit der zweiten Fläche in Haftkontakt steht, insbesondere eine von einer Klarglasscheibe versetzte Rahmenschicht.

7. Beleuchtete Fahrzeugverglasung nach einem der vorstehenden Ansprüche, **dadurch gekennzeichnet, dass** sie ein undurchsichtiges Umfangselement (80 bis 85) umfasst, das zwischen der zweiten und dritten Fläche und sogar zwischen einer Schicht zur inneren Abdeckung und der dritten Fläche angeordnet ist, insbesondere zur inneren Abdeckung eines Bereichs, in den Licht über eine Öffnung in der zweiten lichtleitenden, vorzugsweise als Innenverglasung dienenden, Scheibe, oder von einer Lichtquelle auf der vierten Fläche eingestrahlt wird, wobei die zweite Scheibe vorzugsweise als Innenverglasung dient und lichtleitend ist.

8. Beleuchtete Fahrzeugverglasung nach dem vorstehenden Anspruch, **dadurch gekennzeichnet, dass** das innere undurchsichtige Element eine insbesondere lokal undurchsichtige Bereichsschicht der optischen Isolierschicht oder einer Haftschicht aus vernetztem Polymer ist, wie beispielsweise einer unteren Haftschicht unter der optischen Isolierschicht oder einer oberen Haftschicht auf der optischen Isolierschicht oder einer Rahmenschicht am Umfang der optischen Isolierschicht oder einer insbesondere polymeren Folie, die in die Verbundzwischenlage eingesetzt ist.

9. Beleuchtete Fahrzeugverglasung nach einem der vorstehenden Ansprüche, **dadurch gekennzeichnet, dass** sie eine periphere Lichtquelle, insbesondere unter einer Schicht zur inneren Abdeckung, in optischer Kopplung mit der zweiten, vorzugsweise als Innenverglasung dienenden, lichtleitenden Scheibe umfasst, und **dadurch, dass** sie ein lichtundurchlässiges Anti-Halo-Element am Rand eines Lichteinstrahlungsbereichs in den Lichtleiter, das mit der dritten Fläche in Kontakt steht, vorzugsweise mit einer Breite von höchstens 10 cm, umfasst, und/oder **dadurch, dass** sie ein weiteres lichtundurchlässiges Anti-Halo-Element auf der vierten Fläche umfasst, die einem Rand eines Lichteinstrahlungsbereichs in den Lichtleiter gegenüberliegt, vorzugsweise mit einer Breite von höchstens 10 cm.

10. Beleuchtete Fahrzeugverglasung nach dem vorstehenden Anspruch, **dadurch gekennzeichnet, dass** das innere, lichtundurchlässige Anti-Halo-Element einen Brechungsindex n'1 im sichtbaren Bereich aufweist, sodass n0-n'1 im sichtbaren Bereich mindestens 0,04 und sogar mindestens 0,1 beträgt, und **dadurch, dass** die absolute Differenz n'1-n1 im sichtbaren Bereich höchstens 0,04 und sogar höchstens 0,01 beträgt.

11. Beleuchtete Fahrzeugverglasung nach einem der vorstehenden Ansprüche, **dadurch gekennzeichnet, dass** eine Lichteinstrahlung aus einer Lichtquelle, die optisch mit der zweiten lichtleitenden Schicht, vorzugsweise einer Leuchtdiodenanordnung, gekoppelt ist, folgendermaßen erfolgt:
1) durch einen Teil der zweiten Glasscheibe
2) oder durch eine Wand einer Öffnung in der zweiten Glasscheibe, insbesondere einer gegenüber einer Schicht zur inneren Abdeckung versetzten Öffnung
3) oder durch ein Lichtumlenkelement, beispielsweise eine optische Umlenkfolie, auf der dritten oder vierten Hauptfläche, wobei die Lichtquelle dann gegenüber der vierten Hauptfläche angeordnet oder von dieser versetzt ist, insbesondere durch direkte optische Kopplung oder über eine Optik, insbesondere eine Lichtquelle und ein Lichtumlenkelement, die von einer Klarglasscheibe versetzt sind und einer Schicht zur inneren Abdeckung gegenüberliegen.

12. Beleuchtete Fahrzeugverglasung, insbesondere Straßenfahrzeugverglasung, nach einem der vorstehenden Ansprüche, **dadurch gekennzeichnet, dass** die erste Scheibe die Außenscheibe ist, die Verglasung aus einem Dach, einer Windschutzscheibe, einer Seitenscheibe ausgewählt ist oder **dadurch, dass** die erste Scheibe die Innenscheibe ist, die Verglasung ausgewählt ist aus einer Windschutzscheibe, einer Seitenscheibe, einer Heckscheibe, einer Heckfensterscheibe, insbesondere die äußere Scheibe aus Mineralglas besteht.

13. Fahrzeug, insbesondere Straßenfahrzeug, das mindestens eine beleuchtete Verglasung nach einem der vorstehenden Ansprüche einschließt.

14. Verfahren zum Herstellen einer beleuchteten Fahrzeugverglasung, insbesondere Straßenfahrzeugverglasung, nach einem der Ansprüche 1 bis 12, umfassend:
- eine Anordnung der ersten Glasscheibe, der Verbundzwischenlage mit mindestens der optischen Isolierschicht, und der zweiten Glasscheibe, wobei die optische Isolierschicht eine PSA-Folie oder eine sogenannte Post-Haftfolie aus einem vor dem Zusammenfügen teilweise photovernetzten Polymermaterial oder eine Beschichtung auf einem Polymerträger ist,
- ein Verbund mit Entgasung und Überdruckbeaufschlagung.

15. Verfahren zum Herstellen einer beleuchteten Fahrzeugverglasung, insbesondere Straßenfahrzeugverglasung, nach einem der Ansprüche 1 bis 12, mit einer Anordnung der ersten Glasscheibe, der Verbundzwischenlage mit mindestens der optischen Isolierschicht, und der zweiten Glasscheibe, wobei das Verfahren vor dem Zusammenfügen das Aufbringen der optischen Isolierschicht auf die zweite und/oder erste Glasscheibe und vorzugsweise eine Photovernetzung aufweist.

## Claims

1. A luminous glazing for a vehicle, in particular a road vehicle (100 to 802), comprising:
- a laminated glazing, which preferably is curved, comprising:
- a first sheet (1), made of mineral or organic glass, with a first main face (11) and a second main face (12)
- a second sheet (2), made of mineral or organic glass, with a third bare or coated main face (13) and a fourth main face (14), which second sheet has a refractive index n0 of at least 1.5 in the visible range,
- a polymer lamination interlayer (3) in adhesive contact with the third bare or coated face and with the second bare or coated face
- between the second face and the third face, an optical isolator layer (3, 31) optically isolating the second sheet from the first sheet, with a refractive index n1 in the visible range, and with n0-n1 which is at least 0.04 in the visible range, the optical isolator layer having a thickness at least 500 nm,
- preferably a light source (4) in optical coupling with the second light guide sheet,
- preferably means for extracting guided light (6) in the second sheet, **characterized in that** the optical isolator layer is an adhesive layer made of crosslinked polymer material, forming all or part of the lamination interlayer.

2. The luminous vehicle glazing according to the preceding claim, **characterized in that** the crosslinked polymer material of the optical isolator layer and/or of an upper or lower adhesive layer of the lamination interlayer made of crosslinked polymer material is chosen from polymers based on polyacrylate, in particular of urethane acrylate or fluorourethane acrylate or fluorosilicone acrylate,polysiloxanes, silicone, in particular polydimethylsiloxane, epoxy polymer or polyepoxides, polyurethane, polyvinyl acetate, polyester and in particular the crosslinked polymer material of the optical isolator layer is preferably selected from a polymer based on acrylate, in particular from urethane acrylate or silicone acrylate or based on silicone, and the polymer further having a fluorinated function.

3. The luminous vehicle glazing according to one of the preceding claims, **characterized in that** at least one optical film (60) is between the optical isolator layer and the third face, and even in contact with the optical isolator layer, and **in that** the optical film, in particular polymer, is chosen from:
- film called extractor film, forming means for extracting guided light in the second sheet or in a layer underlying the optical isolator layer
- and/or local redirecting film, forming means for redirecting light in the second glass sheet coming from a light source (4) on the fourth face side or even offset from the glazing.

4. The luminous vehicle glazing according to one of the preceding claims, **characterized in that** the optical isolator layer, which is preferably in adhesive contact with the third face, is a coating on a polymer support (32), in particular thermoplastic and preferably with a thickness of at least 30 µm, and the other main face of the support optionally comprising another crosslinked polymer adhesive layer (33) in contact with the second face or with an upper adhesive and polymer, in particular thermoplastic, layer of the lamination interlayer.

5. The luminous vehicle glazing according to one of the preceding claims, **characterized in that** the optical isolator layer, which is preferably in adhesive contact with the third face and/or an upper or lower crosslinked polymer layer of the lamination interlayer, is a film based on crosslinked polymer, in particular of at least 30 µm, chosen from:
- pressure-sensitive film, which is preferably in adhesive contact with the third face, and preferably selected from acrylate, urethane acrylate or fluorourethane acrylate or silicone-based polymers
- a partially photo-crosslinked polymer post-adhesive film before assembly and photo-crosslinked after assembly, and preferably acrylate-based.

6. The luminous vehicle glazing according to one of the preceding claims, **characterized in that** a so-called framing layer surrounds the periphery of the optical isolator layer, preferably a thermoplastic adhesive or crosslinked polymer layer in contact with the optical isolator layer and even optionally in adhesive contact with the third face and even with the second face, in particular framing layer offset from a clear glass area.

7. The luminous vehicle glazing according to one of the preceding claims, **characterized in that** it comprises an opaque (80 to 85) peripheral element between the second and third face and even between an internal masking layer and the third face, in particular an internal masking of a light injection zone via a hole in the second sheet forming a light guide, preferably an interior glazing, or a light source on the fourth face, the second sheet preferably being interior glazing and forming a light guide.

8. The luminous vehicle glazing according to the preceding claim, **characterized in that** the internal opaque element is a layer, in particular a locally opaque zone of the optical isolator layer or of a crosslinked polymer adhesive layer such as a lower adhesive layer under the optical isolator layer or upper adhesive layer on the optical isolator layer or a framing layer on the periphery of the optical isolator layer or else a film, in particular polymer, inserted within the lamination interlayer.

9. The luminous vehicle glazing according to one of the preceding claims, **characterized in that** it comprises a peripheral light source, in particular under an internal masking layer, in optical coupling with the second sheet forming a light guide, preferably the interior glazing, and **in that** it comprises an opaque anti-halo element at the edge of a zone for injecting light into the guide, in contact with the third face, preferably having a width of at most 10 cm and/or **in that** it comprises another opaque anti-halo element on the fourth face facing an edge of a zone for injecting light into the guide, preferably having a width of at most 10 cm.

10. The luminous vehicle glazing according to the preceding claim, **characterized in that** the internal anti-halo element has a refractive index n'1 in the visible range, such that n0-n'1 is at least 0.04 in the visible range and even at least 0.1 and **in that** the absolute value deviation n'1-n1 is at most 0.04 in the visible range and even at most 0.01.

11. The luminous vehicle glazing according to one of the preceding claims, **characterized in that** an injection of light from a light source in optical coupling with the second sheet forming a light guide, preferably a set of light-emitting diodes, is:
1) by an edge face of the second glass sheet
2) or by a wall of a hole of the second glass sheet, in particular hole offset from a clear glass area, facing an internal masking layer
3) or by a light redirecting element, local such as an optical redirecting film, on the third main face or fourth main face side, the light source then facing or being offset from the fourth main face, in particular direct optical coupling or by means of an optical system, in particular light source and light redirecting element offset from a clear glass area, facing an internal masking layer.

12. The luminous glazing for a vehicle, in particular a road vehicle, according to one of the preceding claims, **characterized in that** the first sheet is the external sheet, the glazing is chosen from a roof, a windshield, a side window, or **in that** the first sheet is the internal sheet, the glazing is chosen from a windshield, a side window, a rear window, a rear door glazing, in particular the external sheet is made of mineral glass.

13. A vehicle, in particular road vehicle incorporating at least one luminous glazing according to one of the preceding claims.

14. A method for manufacturing the luminous glazing for a vehicle, in particular a road vehicle, according to one of claims 1 to 12, comprising:
- an assembly of the first glass sheet, the lamination interlayer comprising at least the optical isolator layer and the second glass sheet, the optical isolator layer is a PSA film or a so-called post-adhesive film made of partially photo-crosslinkable polymer material before assembly or a coating on a polymer support,
- a lamination comprising degassing and a positive pressurization.

15. The method for manufacturing the luminous glazing for a vehicle, in particular a road vehicle, according to one of claims 1 to 12, comprising assembling the first glass sheet, the lamination interlayer comprising at least the optical isolator layer and the second glass sheet, the method comprises, before assembly, depositing the optical isolator layer on the second and/or first glass sheet and preferably a photocrosslinking.
